# EUROPEAN PATENT APPLICATION

(11) **EP 4 844 507 A1**
(43) Date of publication of application: **25.11.2026**
(21) Application number: 25882094.3
(22) Date of filing: 09.01.2025
(51) Int. Cl.: G05B 19/4093, B23K 26/00, B23K 26/38, G05B 19/409, G05B 19/4097

(54) **NESTING METHOD, UNIT MACHINING PROGRAM GENERATION METHOD, PIPE MACHINING TOOL, PIPE MACHINING SYSTEM, AND COMPUTER PROGRAM**

(30) Priority: 23.10.2024 JP 2024187012
(71) Applicant: Yamazaki Mazak Corporation, Niwa-gun, Aichi 480-0197 (JP)
(72) Inventor: ITO, Masato, Niwa-gun, Aichi 480-0197 (JP); MIWA, Daisuke, Niwa-gun, Aichi 480-0197 (JP); NAKAMOTO, Tetsuro, Niwa-gun, Aichi 480-0197 (JP); SUMIDA, Yasuharu, Niwa-gun, Aichi 480-0197 (JP)
(74) Representative: TBK
(86) International application number: PCT/JP2025/000548
(87) International publication number: WO 2026/088459

(57) **Abstract**

A nesting method includes inputting into a numerical control computer to control operation of a pipe processing machine, a plurality of unit machining programs, each of which includes, within its program code, a code that defines a tool path for cutting out a target product from a plurality of products to be cut from a pipe, and a machining profile, defined separately from the tool path, indicating the shape of each of at least one pipe cut surface of the target product and arrangement characteristics of the each pipe cut surface within the pipe. When a first shape, which is the shape of a first cut surface that is one of at least one pipe cut surface of a first unit machining program, fits a second shape, which is the shape of a second cut surface that is one of at least one pipe cut surface of a second unit machining program, the numerical control computer generates an integrated machining program such that the first cut surface and the second cut surface facing each other based on the arrangement characteristics to cut the first cut surface and the second cut surface along a common line.

## Description

### Technical Field

The present specification relates to a nesting method, a method for generating a unit machining program, a pipe processing machine, a pipe processing system, and a computer program.

### Background Art

Patent Document 1 discloses a technology for generating arrangement data used when cutting parts of multiple shapes from a pipe material in a CAM computer, and for generating a nested machining program based on that arrangement data. Patent Document 2 discloses a technology that enables nesting for integrating multiple unit machining programs, each for generating a plurality of products, on an NC device. Patent Document 2 also discloses a technology wherein graphical data for each of the multiple products is added to the header of each of the multiple unit machining programs, and an image of the product is displayed on the NC device based on the graphical data. The operator shifts and rotates the image on the NC device to determine the program origin of each unit machining program and the correspondence relationship between the workpiece coordinate system and the machine coordinate system, and thus the NC device generates a nested machining program.

### Prior Art Document

### Patent Documents

[Patent Document 1] Japanese Unexamined Patent Application Publication No. 2014-085743
[Patent Document 2] Japanese Unexamined Patent Application Publication No. 2000-163111

### SUMMARY

### Problems to be Solved by the Invention

In the method described in Patent Document 1, when the pipe processing machine executes the machining program, if a fine correction is desired, the CAM computer needs to generate a machining program again. If the method described in Patent Document 2 is applied to solve this problem, the user must determine the arrangement of each product on the NC device. In the correction of the nested machining program, there are many cases where the operator only wants to select a part of the products manufactured by the machining program, and the method described in Patent Document 2 imposes too large burden on the operator if the operator only wants to select the part of the products.

An object of the technology disclosed in the present application is to provide a technology that enables the easy reconfiguration of a nested machining program on an NC device by selecting the products to be machined.

### Means for Solving the Problems

According to a first aspect of the present disclosure, a nesting method includes preparing a plurality of unit machining programs in a computer to control operation of a pipe processing machine. Each of the plurality of unit machining programs has a program code that includes a code defining a tool path for cutting out a target product among a plurality of products cut out from a pipe, and a machining profile that is defined separately from the tool path and that indicates a shape of each pipe cut surface of at least one pipe cut surface of the target product and an arrangement characteristics of each pipe cut surface within the pipe. The nesting method includes selecting a plurality of selected unit machining programs from the plurality of unit machining programs by the computer, the plurality of selected unit machining programs being to be nested The nesting method includes, when a first shape, which is the shape of a first cut surface that is one of the at least one pipe cut surface of a first unit machining program among the plurality of selected unit machining programs, fits a second shape, which is the shape of a second cut surface that is one of the at least one pipe cut surface of a second unit machining program among the plurality of selected unit machining programs, generating by the numerical control computer an integrated machining program in which the plurality of target products of the plurality of selected unit machining programs are nested so that the first cut surface and the second cut surface face each other based on the arrangement characteristics to cut the first cut surface and the second cut surface along a common line. Preferably, the nesting method includes reading, by the computer, the machining profile of each of the plurality of selected unit machining programs and determining whether there is at least one set of unit machining programs such that the first shape fits the second shape.

According to a second aspect of the present disclosure, the nesting method further includes receiving, by the numerical control computer, an input as to whether or not to permit common-line cutting in the integrated machining program. The nesting method further includes generating the integrated machining program so that the first cut surface and the second cut surface are subjected to common-line cutting when the common-line cutting is permitted by the input. The nesting method further includes generating the integrated machining program so that the first cut surface and the second cut surface are machined separately when the common-line cutting is not permitted by the input.

According to a third aspect of the present disclosure, in the nesting method according to the first aspect or the second aspect, the arrangement characteristics further include common-line cutting suitability information indicating either common-line cutting suitability which shows that each pipe cut surface is subject to common-line cutting, or common-line cutting unsuitability which shows that each pipe cut surface is not subject to common-line cutting. Preferably, the arrangement characteristics of the first cut surface include the common-line cutting suitability, and the arrangement characteristics of the second cut surface include the common-line cutting suitability.

According to a fourth aspect of the present disclosure, in the nesting method according to the third aspect, each pipe cut surface is a flat cut surface that indicates a flat plane, the arrangement characteristics of the flat cut surface have the common-line cutting suitability. The shape of the flat cut surface is defined by a first rotation angle and a second rotation angle, the first rotation angle being formed by the flat cut surface and a reference plane that is a flat plane perpendicular to a first rotation axis along the longitudinal direction of the pipe, the second rotation angle being formed by a reference axis perpendicular to the first rotation axis and the line of intersection of the reference plane and the flat cut surface. The integrated machining program is generated so that the first shape and the second shape are subjected to common-line cutting when the first rotation angle of the first cut surface is equal to the first rotation angle of the second cut surface.

According to a fifth aspect of the present disclosure, in the nesting method according to the fourth aspect, the tool paths are defined by a workpiece coordinate system established in each of the plurality of unit machining programs. The integrated machining program includes an instruction to manufacture the target product of the first unit machining program before manufacturing the target product of the second unit machining program generating the integrated machining program includes determining a plurality of conversion parameters that define a rotational and translational transformation for converting from the workpiece coordinate system of the first unit machining program to the workpiece coordinate system of the second unit machining program, such that a first tool path for generating the first cut surface coincides with a second tool path for generating the second cut surface. The generating the integrated machining program includes preparing codes for setting processes before the code defining the second tool path, the processes including a process to set a position of the reference point of the workpiece coordinate system of the second unit machining program based on a translation parameter among the plurality of conversion parameters that defines the translational transformation, and a process to set orientations of coordinate axes of the workpiece coordinate system of the second unit machining program based on respective rotation parameters among the plurality of conversion parameters that defines the rotational transformation. The generating the integrated machining program includes invalidating one of the code defining the first tool path and the code defining the second tool path.

According to a sixth aspect of the present disclosure, in the nesting method according to the fifth aspect, the arrangement characteristics further include at least one allowable rotation angle by which the target product can be rotated around the first rotation axis in the nesting. The rotation parameter includes one rotation angle of the at least one allowable rotation angle of the second cut surface.

According to a seventh aspect of the present disclosure, in the nesting method according to the fifth aspect or the sixth aspect, the translation parameter includes a length of the first cut surface and the second cut surface in a longitudinal direction which are subjected to common-line cutting.

According to an eighth aspect of the present disclosure, in the nesting method according to any one of the first to seventh aspects, the pipe has a rear end surface mounted on the chuck of the pipe processing machine and a front end surface opposite to the rear end surface in a longitudinal direction of the pipe. The arrangement characteristics have relative position information indicating whether the target product is on the front side positioned between each pipe cut surface and the rear end surface or on the rear side positioned between each pipe cut surface and the front end surface in the longitudinal direction when the nesting is performed.

According to a ninth aspect of the present invention, in the nesting method according to any one of the first to eighth aspects, the selecting the plurality of selected unit machining programs includes setting a priority order for the plurality of selected unit machining programs. Generating the integrated machining program includes generating a code to call the selected unit machining programs in the order of the priority order.

According to a tenth aspect of the present disclosure, in the nesting method according to any one of the first to ninth aspects, when the first unit machining program includes a first lead-in code for performing lead-in cutting along a path connected to the first tool path for generating the first cut surface, generating the integrated machining program includes invalidating the first lead-in code. When the second unit machining program includes a second lead-in code for performing lead-in cutting along a path connected to the second tool path for generating the second cut surface, generating the integrated machining program includes invalidating the second lead-in code.

A unit machining program generation method according to an eleventh aspect of the present disclosure includes generating, by a computer, a program code including a code defining a tool path for cutting out a target product, based on shape data of the target product, shape data of a pipe, and the arrangement of the target product within the pipe. The unit machining program generation method includes generating, by the computer, a machining profile indicating the shape of each pipe cut surface and the arrangement characteristics within the pipe of the at least one pipe cut surface of the target product. The unit machining program generation method includes generating, by the computer, a unit machining program in which the machining profile is inserted into the program code.

According to a twelfth aspect of the present disclosure, in the unit machining program generation method according to the eleventh aspect, the arrangement characteristics further includes common-line cutting suitability information indicating either common-line cutting suitability which shows that each pipe cut surface is subject to common-line cutting, or common-line cutting unsuitability which shows that each pipe cut surface is not subject to common-line cutting. Generating the program code includes generating a code that can skip, based on a first flag, a pipe cutting code defining a tool path for generating a common-line cutting candidate cut surface having the common-line cutting suitability among the at least one pipe cut surface in the workpiece coordinate system, and a code that can select, based on the first flag, whether to execute a process for setting the reference position of the workpiece coordinate system based on the longitudinal length of the common-line cutting candidate cut surface within the pipe, or based on a margin length from the end surface of the pipe or the rear end of the target product to be machined immediately before the execution of the unit machining program.

According to a thirteenth aspect of the present disclosure, in the unit machining program generation method according to the twelfth aspect, the generating of the program code includes generating a code for performing a process of rotating the workpiece coordinate system based on a delivered parameter delivered from a program that calls the unit machining program .

According to a fourteenth aspect of the present disclosure, in the unit machining program generation method according to the twelfth or thirteenth aspect, when the generating the program code includes a lead-in code for performing lead-in cutting along a path connected to a tool path for generating the candidate cut surface of the common-line cutting, the generating the program code further includes generating a code capable of skipping the lead-in code based on the second flag.

According to a fifteenth aspect of the present disclosure, in the unit machining program generation method according to any one of the tenth to fourteenth aspects, when each pipe cut surface is a plane cut surface that is a flat plane, the arrangement characteristics of the plane cut surface has suitability with the common-line cutting. The shape of the flat cut surface is defined by a first rotation angle and a second rotation angle, the first rotation angle being formed by the flat cut surface and a reference plane that is a flat plane perpendicular to a first rotation axis along the longitudinal direction of the pipe, the second rotation angle being formed by a reference axis perpendicular to the first rotation axis and the line of intersection of the reference plane and the flat cut surface.

According to a sixteenth aspect of the present disclosure, in the unit machining program generation method according to the fifteenth aspect, the arrangement characteristics further includes at least one allowable rotation angle at which the target product can be rotated around the first rotation axis in the nesting.

According to a seventeenth aspect of the present disclosure, in the unit machining program generation method according to any one of the tenth to fourteenth aspects, the pipe has a rear end surface to be mounted on a chuck of the pipe processing machine and a front end surface opposite to the rear end surface in a longitudinal direction of the pipe. The arrangement characteristics have relative position information indicating whether the target product is on the front side positioned between each pipe cut surface and the rear end surface in the longitudinal direction or on the rear side positioned between each pipe cut surface and the front end surface in the longitudinal direction when the nesting is performed. The relative position information is determined based on the arrangement of the target product in the pipe.

According to an eighteenth aspect of the present disclosure, the pipe processing machine includes a numerical control computer configured to execute the nesting method of any one of the first aspect to the tenth aspect above.

The pipe processing system according to a nineteenth aspect of the present disclosure includes a pipe processing machine including a numerical control computer configured to execute the nesting method according to any one of the first aspect to and the tenth aspect above, an external computer configured to execute the unit machining program generation method according to any one of the eleventh aspect to the seventeenth aspect, and a communication network connecting the numerical control computer and the external computer.

The computer program according to a twentieth aspect of the present disclosure, the computer program includes instructions that, when executed by a computer, cause the computer to execute the nesting method according to any one of the first aspect to the tenth aspect or the unit machining program generation method according to any one of the eleventh aspect to the seventeenth aspect.

In the nesting method according to the first aspect, the pipe processing machine according to the eighteenth aspect including the numerical control computer configured to execute the nesting method according to the first aspect, the pipe processing system according to the nineteenth aspect including the pipe processing machine including the numerical control computer configured to execute the nesting method of the first aspect, and the computer program according to the twentieth aspect including the instruction to cause the computer to execute the nesting method of the first aspect, since the machining profile further includes the arrangement characteristic of each pipe cut surface in the pipe, by selecting the target product to be processed, it is possible to automatically rearrange or change the posture of the plurality of target products without further performing rearrangement by the user, and thus it is possible to easily reconfigure the nested processing program.

In the nesting method according to the second aspect, the pipe processing machine according to the eighteenth aspect including the numerical control computer configured to execute the nesting method according to the second aspect, the pipe processing system according to the nineteenth aspect including the pipe processing machine including the numerical control computer configured to execute the nesting method of the second aspect, and the computer program according to the twentieth aspect including the instruction to cause the computer to execute the nesting method of the second aspect, the user can determine whether or not to perform the common-line cutting, and thus the convenience of the user is improved.

In the nesting method according to the third aspect, the pipe processing machine according to the eighteenth aspect including the numerical control computer configured to execute the nesting method according to the third aspect, the pipe processing system according to the nineteenth aspect including the pipe processing machine including the numerical control computer configured to execute the nesting method according to the third aspect, and the computer program according to the twentieth aspect including the instruction to cause the computer to execute the nesting method according to the third aspect, it is possible to set the appropriateness of the common-line cutting for each pipe cut surface.

In the nesting method according to the fourth aspect, the unit machining program generation method according to the fifteenth aspect, the pipe processing machine according to the eighteenth aspect including the numerical control computer configured to execute the nesting method according to the fourth aspect, the pipe processing system according to the nineteenth aspect including the pipe processing machine including the numerical control computer configured to execute the nesting method according to the fifteenth aspect, the computer program according to the twentieth aspect including the instruction to cause the computer to execute the nesting method according to the fourth aspect, and the computer program according to the twentieth aspect including the instruction to cause the computer to execute the unit machining program generation method according to the fifteenth aspect, the common-line cutting can be performed only when the each pipe cut surface is a flat plane, and thus it is possible to easily determine whether the common-line cutting can be performed. In addition, each pipe cut surface may be defined only by the first rotation angle and the second rotation angle.

In the nesting method according to the fifth aspect, the pipe processing machine according to the eighteenth aspect including the numerical control computer configured to execute the nesting method according to the fifth aspect, the pipe processing system according to the nineteenth aspect including the pipe processing machine including the numerical control computer configured to execute the nesting method according to the fifth aspect, and the computer program according to the twentieth aspect including the instruction to cause the computer to execute the nesting method according to the fifth aspect, the integrated machining program can be generated by setting the translation parameter and the rotation parameter without changing the code defining the first tool path and the program code defining the second tool path.

The nesting method according to the sixth aspect, the unit machining program generation method according to the sixteenth aspect, the pipe processing machine according to the eighteenth aspect including the numerical control computer configured to execute the nesting method according to the sixth aspect, the pipe machining system according to the nineteenth aspect including the pipe processing machine including the numerical control computer configured to execute the nesting method according to the sixteenth aspect, the computer program according to the twentieth aspect including the instruction to cause the computer to execute the nesting method according to the sixth aspect, and the computer program according to the twentieth aspect including the instruction to cause the computer to execute the unit machining program generation method according to the sixteenth aspect enable prompt determination of whether the shape of the first cut surface and the shape of the second cut surface fit with each other for a pipe other than a round pipe.

In the nesting method according to the seventh aspect, the pipe processing machine according to the eighteenth aspect including the numerical control computer configured to execute the nesting method according to the seventh aspect, the pipe processing system according to the nineteenth aspect including the pipe processing machine including the numerical control computer configured to execute the nesting method according to the seventh aspect, and the computer program according to the twentieth aspect including the instruction for causing the computer to execute the nesting method according to the seventh aspect, the common-line cutting can be realized without changing the code defining the second tool path by using the distance in the longitudinal direction of the pipe that is shorter than that in a case where the common-line cutting is not performed.

In the nesting method according to the eighth aspect, the unit machining program generation method according to the seventeenth aspect, the pipe processing machine according to the eighteenth aspect including the numerical control computer configured to execute the nesting method according to the eighth aspect, the pipe processing system according to the nineteenth aspect including the pipe processing machine including the numerical control computer configured to execute the nesting method according to the seventeenth aspect, the computer program according to the twentieth aspect including the instruction to cause the computer to execute the nesting method according to the eighth aspect, and the computer program according to the twentieth aspect including the instruction to cause the computer to execute the unit machining program generation method according to the fifteenth aspect, either the front side or the rear side can be designated as the arrangement characteristics. Since it is not necessary to change the front-rear direction from the unit machining program, it is not necessary to perform complicated coordinate calculation or recalculation of the offset amount in the longitudinal direction of the pipe, and thus it is easy to generate the integrated machining program.

In the nesting method according to the ninth aspect, the pipe processing machine according to the eighteenth aspect including a computer configured to execute the nesting method according to the ninth aspect, the pipe processing system according to the nineteenth aspect including the pipe processing machine including the numerical control computer configured to execute the nesting method of the ninth aspect, and the computer program according to the twentieth aspect including instructions for causing a computer to execute the nesting method of the ninth aspect, nesting can be flexibly set by processing the target product having a high user need first, setting a set of a plurality of target products to be subjected to the common-line cutting to have an adjacent priority, or setting a set of a plurality of target products not to be subjected to the common-line cutting to have a non-adjacent priority.

In the nesting method according to the tenth aspect, the unit machining program generation method according to the fourteenth aspect, the pipe processing machine according to the eighteenth aspect including the numerical control computer configured to execute the nesting method according to the tenth aspect, the pipe machining system according to the nineteenth aspect including the pipe processing machine including the numerical control computer configured to execute the nesting method according to the tenth aspect, the computer program according to the twentieth aspect including the instruction to cause the computer to execute the nesting method according to the tenth aspect, and the computer program according to the twentieth aspect including the instruction to cause the computer to execute the unit machining program generation method according to the fourteenth aspect, it is possible to perform setting not to perform the lead-in cutting on the tool path for performing the common-line cutting.

In the method for generating a unit machining program according to the eleventh aspect, the pipe processing system according to the nineteenth aspect including an external computer configured to execute the method for generating a unit machining program according to the eleventh aspect, and the computer program according to the twentieth aspect including an instruction for causing a computer to execute the method for generating a unit machining program according to the eleventh aspect, the unit machining program including a processing program can be generated based on shape data of the target product, shape data of the pipe, and arrangement of the target product in the pipe.

In the method for generating the unit machining program according to the twelfth aspect, the pipe processing system according to the nineteenth aspect including the external computer configured to execute the method for generating the unit machining program according to the twelfth aspect, and the computer program according to the twentieth aspect including the instruction for causing the computer to execute the method for generating the unit machining program according to the twelfth aspect, since whether or not to execute the common-line cutting can be set only by setting the first flag in the integrated machining program that calls the unit machining program, the generation of the integrated machining program is facilitated.

In the method for generating a unit machining program according to the thirteenth aspect, the pipe processing system according to the nineteenth aspect including an external computer configured to execute the method for generating a unit machining program according to the thirteenth aspect, and the computer program according to the twentieth aspect including an instruction for causing a computer to execute the method for generating a unit machining program according to the thirteenth aspect, the integrated machining program that calls the unit machining program can set the orientation of the coordinate axes of the workpiece coordinate system only by setting the delivered parameter, thereby facilitating generation of the integrated machining program.

### Effects of the Invention

The nesting method, the unit machining program generation method, the pipe processing machine, the pipe machining system, and the computer program disclosed in the present application enable easy reconfiguration of a nested machining program on an NC device by selecting a product to be machined.

### BRIEF DESCRIPTION OF DRAWINGS

FIG. 1 is a diagram showing an external configuration of a pipe processing system according to an embodiment.
FIG. 2 is an example of a program code of a unit machining program.
FIG. 3 is another example of the program code of the unit machining program.
FIG. 4 is an example of a user interface of a nesting program.
FIG. 5 is an example of an additional user interface of the nesting program.
FIG. 6 is an example of a confirmation screen of the integrated machining program when an input for permitting the common-line cutting is made.
FIG. 7 shows an outline of a program code of the integrated machining program when the common-line cutting is performed.
FIG. 8 shows a program code of the unit machining program shown in FIG. 2.
FIG. 9 shows a program code of the unit machining program shown in FIG. 3.
FIG. 10 is an example of a confirmation screen of the integrated machining program when an input not to permit the common-line cutting is made.
FIG. 11 shows an outline of a program code of the integrated machining program when the common-line cutting is not performed.
FIG. 12 is an example of a confirmation screen of the integrated machining program when an input is made to nest a plurality of target products having pipe cut surfaces that have common-line cutting suitability as the arrangement characteristics but do not have a counterpart of the common-line cutting.
FIG. 13 is an example of a confirmation screen of the integrated machining program when an input is made to nest a plurality of target products having pipe cut surfaces in the case where the common-line cutting has unsuitability as the arrangement characteristics.
FIG. 14 is a flowchart showing a flow of processing of a method of generating the unit machining program according to the embodiment.
FIG. 15 is a flowchart showing a flow of processing of a nesting method according to the embodiment.
FIG. 16 is a flowchart showing a flow of processing of a nesting method according to the embodiment.
FIG. 17 is a flowchart showing a detailed process flow of step S27 in FIG. 16.
FIG. 18 is a flowchart showing a detailed process flow of step S28 in FIG. 16.

### DETAILED DESCRIPTION OF THE INVENTION

The present invention will be described in detail below with reference to the drawings showing the embodiments. In the drawings, the same reference numerals indicate corresponding or substantially identical components.

### Embodiment

### <Configuration of Pipe Processing Machine 1>

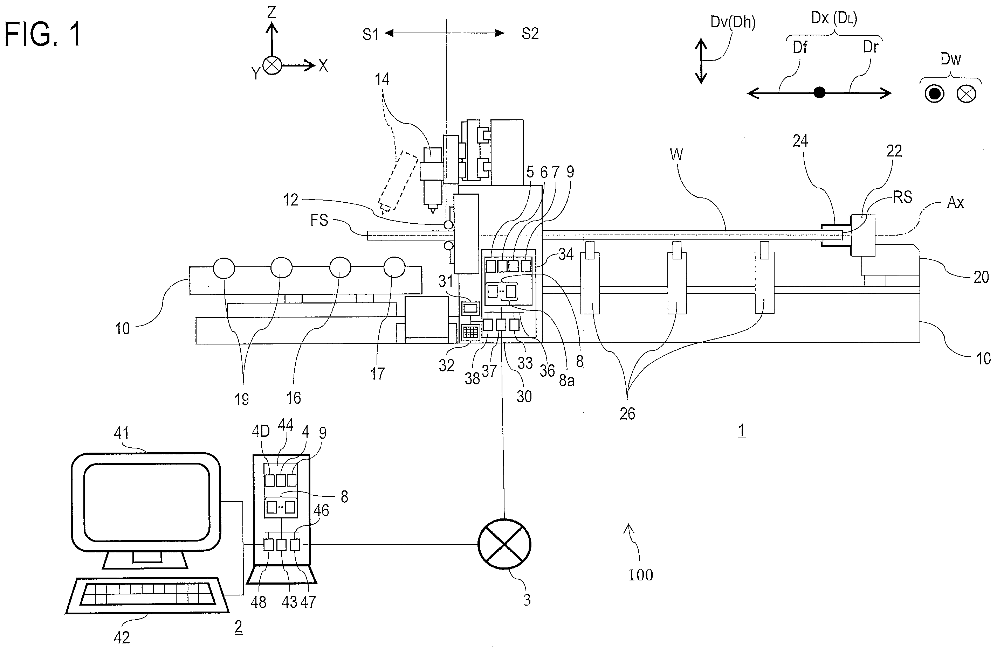

FIG. 1 shows an external configuration diagram of a pipe processing system 100 according to the present embodiments. The pipe processing system 100 includes a pipe processing machine 1, an external computer 2, and a communication network 3 The pipe processing machine 1 includes a base 10, a chuck 12, a laser machining head 14, a first workpiece support member 16, a second workpiece support member 17, an additional workpiece support member 19, a headstock 20, a spindle 22, an additional chuck 24, a swing stopper 26 and a numerical control computer 30. The chuck 12 is configured to grip the workpiece W such that the workpiece W is rotatable about the rotation axis Ax.

The workpiece W is, for example, a round pipe or a square pipe. The cross-section of the square pipe is preferably quadrangular, but may be any polygonal shape. The workpiece W is also gripped by an additional chuck 24 provided on the spindle 22. The spindle 22 is configured to rotate about the rotation axis Ax together with the workpiece W with one end of the workpiece W attached thereto via the additional chuck 24. That is, the additional chuck 24 is configured to rotate about the rotation axis Ax together with the spindle 22. The pipe as the workpiece W has a rear end surface RS to be mounted on the chuck (additional chuck 24) of the pipe processing machine 1 and a front end surface FS opposite to the to the rear end surface RS in the longitudinal direction D_{L} of the pipe along the rotation axis Ax.

The headstock 20 supports the spindle 22 to be freely rotatable around the rotation axis Ax. The headstock 20 is provided at one end of the base 10. The headstock 20 is guided by a rail (not illustrated) provided on the base 10 and is movable in an axial direction Dx along the rotation axis Ax. The spindle 22 and the additional chuck 24 are movable in the axial direction Dx together with the headstock 20. The swing stopper 26 is configured to support the workpiece W between the chuck 12 and the additional chuck 24 in the axial direction Dx to be rotatable around the rotation axis Ax. The headstock 20, the spindle 22, the additional chuck 24, and the swing stopper 26 are provided on the second side S2 opposite to the first side S1 as illustrated with respect to the chuck 12. The pipe processing machine 1 may not include the swing stopper 26.

The workpiece W is gripped by the chuck 12 so as to penetrate the chuck 12. The headstock 20 moves in a forward direction Df from the headstock 20 toward the chuck 12 in the axial direction Dx, so that the workpiece W is pushed out from the chuck 12 in the forward direction Df. As the workpiece W is rotated by the spindle 22, the machining surface of the workpiece W protruding from the chuck 12 is directed toward the laser machining head 14. The laser machining head 14 is provided to the first side S1, which is the opposite side of the additional chuck 24 with respect to the chuck 12 in the axial direction Dx, and is configured to machine the workpiece W with a laser beam to produce products. The laser machining head 14 can be tilted in a direction inclined from the vertical direction Dv toward the axial direction Dx, as shown by the dotted line in FIG. 1. Note that the vertical direction Dv refers to a bilateral direction pointing in the direction of gravity or the opposite direction. The vertical direction Dv substantially coincides with the height direction Dh along the height of the pipe processing machine 1. FIG. 1 illustrates an example in which the laser machining head 14 is tilted in a direction inclined from the vertical direction Dv toward the forward direction Df, but the laser machining head 14 may also be tilted in a direction inclined from the vertical direction Dv toward the backward direction Dr, which is opposite to the forward direction Df. Furthermore, the laser machining head 14 may be tiltable in a direction inclined from the vertical direction Dv toward the width direction Dw, which is perpendicular to both the axial direction Dx and the vertical direction Dv. The machine coordinate system of the pipe processing machine 1 is defined by an X-axis in which the backward direction Dr is the positive direction, a Z-axis in which an upward direction of the height direction Dh is a positive direction, a Y-axis in which a direction from the front side to the back side of the paper surface of FIG. 1 in the width direction Dw is a positive direction, a B-axis represented by a rotation amount (°) around the Y-axis, and a C-axis represented by a rotation amount (°) around the X-axis.

The first workpiece support member 16 and the second workpiece support member 17 are provided to the first side S1. The first workpiece support member 16 and the second workpiece support member 17 are preferably a roller. The first workpiece support member 16 and the second workpiece support member 17 can rotate counterclockwise in FIG. 1 to discharge the products machined by the laser machining head 14 in the forward direction Df. Note that the pipe processing machine 1 may also be equipped with an additional workpiece support member 19 for supporting a long workpiece W. The additional workpiece support member 19 is also preferably a roller for the convenience of discharging the workpiece W. However, the first workpiece support member 16, the second workpiece support member 17, and the additional workpiece support member 19 may be plate-like members.

### <Configuration of numerical control computer 30 and operation of program installed in numerical control computer 30>

The numerical control computer 30 is a computer that controls the operation of the pipe processing machine 1. The numerical control computer 30 includes a monitor 31, input devices 32, at least one hardware processor 33, memory 34, a system bus 36, a network adapter 37, and an input/output interface 38. The at least one hardware processor 33, memory 34, system bus 36, network adapter 37, and input/output interface 38 are examples of circuitry. The system bus 36 electrically connects the at least one hardware processor 33, memory 34, system bus 36, network adapter 37, and input/output interface 38 in a manner that allows them to send and receive data and instructions to and from each other. The network adapter 37 is a network adapter such as a wired/wireless LAN that connects to other computers via the communication network 3.

The input/output interface 38 is an interface for connecting the monitor 31, input devices 32, an unillustrated actuator, an unillustrated laser oscillator, and the hardware processor 33. It refers to, for example, a video card, various serial/parallel communication interfaces, and an interface for sending signals to the drivers of the aforementioned actuator and laser oscillator. The aforementioned actuator refers to, for example, motors that move the chuck 12, the laser machining head 14, the first workpiece support member 16, the second workpiece support member 17, the additional workpiece support member 19, the headstock 20, the spindle 22, and the additional chuck 24. The aforementioned laser oscillator is configured to output a laser to the laser machining head 14.

The monitor 31 is typically provided on the control panel of a numerical control computer 30. The input device 32 typically includes keys and buttons provided on the control panel of the numerical control computer 30. Furthermore, if the monitor 31 has a touch panel, the input device 32 also includes that touch panel. However, the monitor 31 and the input device 32 are not limited to the examples described above and may be any monitor and input device connected to the numerical control computer 30 via the hardware processor 33.

The memory 34 is configured to store a control program 5, a nesting program 6, an integrated machining program 7, a plurality of unit machining programs 8, and a plurality of original integrated machining programs 9. Therefore, the plurality of unit machining programs 8 and the plurality of original integrated machining programs 9 are prepared in the numerical control computer 30. Each of the integrated machining program 7, the plurality of unit machining programs 8, and the plurality of original integrated machining programs 9 is described, for example, in EIA/ISO program code and includes code that defines a tool path for cutting out a target product from a plurality of products to be cut from a pipe (workpiece W). Each of the plurality of unit machining programs 8 includes, within its program code, a machining profile 80 (details described later) indicating the shape of each of at least one pipe cut surface of the target product and the arrangement characteristics of each pipe cut surface within the pipe. Here, the target product refers to a product manufactured by each of the plurality of unit machining program 8. Details of the machining program will be described later. The integrated machining program 7 has a code for calling a plurality of unit machining programs 8. The plurality of original integrated machining programs 9 are programs in which a plurality of products generated by CAD/CAM (Computer-Aided Manufacturing) software of the external computer 2 are nested, and when the original integrated machining program 9 is generated, a unit machining program 8 corresponding to each product manufactured by the original integrated machining program 9 is generated. The memory 34 stores a plurality of unit machining programs 8 corresponding to all products manufactured by the original integrated machining program 9.

The control program 5 has a software library for generating various signals to be outputted via the input/output interface 38 in order to control the above-described actuator and control the above-described laser oscillator based on the EIA/ISO program codes written in the integrated machining program 7 and the plurality of unit machining programs 8. That is, the memory 34 comprises instructions which, when executed by the at least one hardware processor 33, cause the numerical control computer 30 to perform a pipe machining process defined by the integrated machining program 7 and the plurality of unit machining programs 8.

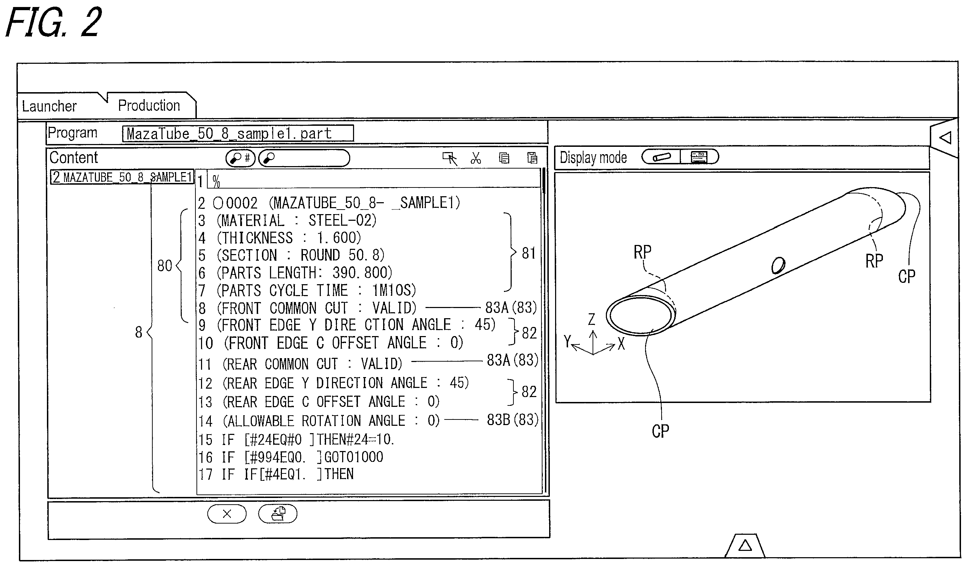

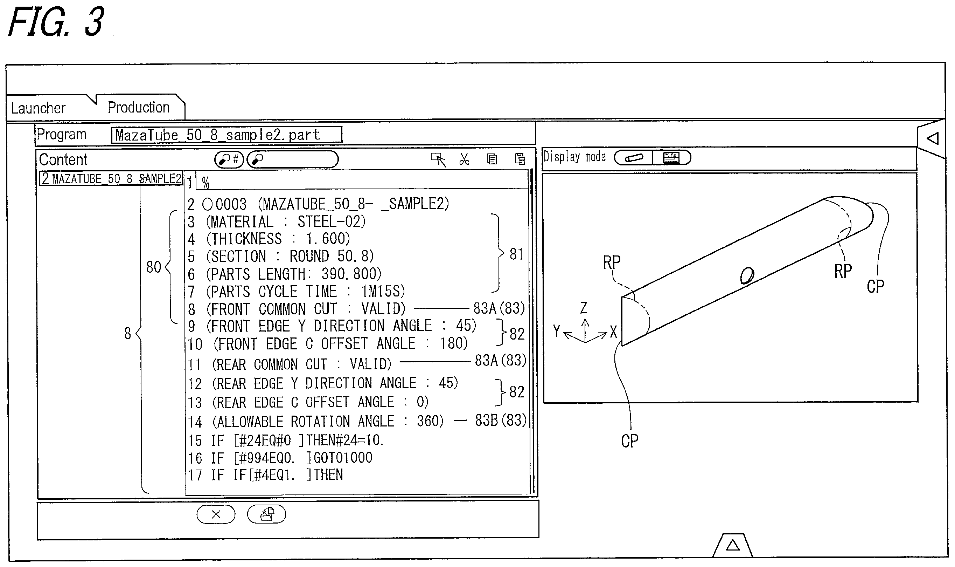

FIGS. 2 and 3 show an example of a program code of the unit machining program 8. FIG. 2 and FIG. 3 show, on the right side of the program code of the unit machining program 8, an image representing the three-dimensional shape of the target product using computer graphics. FIG. 2 and FIG. 3 are examples of screens displayed on the monitor 31. As shown in FIGS. 2 and 3, the program code of the unit machining program 8 includes a machining profile 80 represented as a comment. The machining profile 80 includes a workpiece material profile 81, a product shape profile 82, and an arrangement characteristic profile 83. The nesting program 6 comprises instructions that, when executed by the at least one hardware processor 33, cause the numerical control computer 30 to execute a process of analyzing the comment lines of the program code of the unit machining program 8 and extracting information relating to the workpiece material profile 81, the product shape profile 82, and the arrangement characteristic profile 83.

In the examples of FIG. 2 and FIG. 3, the workpiece material profile 81 indicates in the "MATERIAL:" line that the pipe material is steel (STEEL) and the laser gas is oxygen (O2). The workpiece material profile 81 indicates in the "THICKNESS:" line that the wall thickness of the pipe is 1.6 mm. The workpiece material profile 81 indicates in the "SECTION:" line that the shape of the pipe is a round pipe and its diameter is 50.8 mm. The workpiece material profile 81 indicates in the "PARTS LENGTH:" line that the length of the target product in the longitudinal direction DL of the pipe is 390.8 mm. The workpiece material profile 81 indicates in the "PARTS CYCLE TIME:" line that the cycle time for manufacturing the target product of FIG. 2 is 1 minute and 10 seconds, and the cycle time for manufacturing the target product of FIG. 3 is 1 minute and 15 seconds.

The product shape profile 82 is a profile indicating the shape of each of at least one pipe cut surface of the target product. The arrangement characteristic profile is a profile indicating the arrangement characteristics of each pipe cut surface in the pipe. The product shape profile 82 and the arrangement characteristic profile 83 have relative position information indicating whether the target product is a front side (FRONT) located between each pipe cut surface and the rear end surface RS in the longitudinal direction DL or a rear side (REAR) located between each pipe cut surface and the front end surface FS in the longitudinal direction DL when nested. That is, the arrangement characteristics have the above-described relative position information. The shape of the cut surface on the front side among the pipe cut surfaces is arranged to the front side even after the nesting, and is not arranged to the rear side by switching the front and rear sides. The shape of the cut surface on the rear side among the pipe cut surfaces is arranged to the rear side even after the nesting, and is not arranged to the front side by switching the front and rear.

The arrangement characteristics represented by the arrangement characteristic profile 83 further includes, in the rows of " FRONT COMMON CUT:" and " REAR COMMON CUT:", common-line cutting appropriateness information 83A which indicates either common-line cutting suitability (VALID) indicating that each pipe cut surface is a target of the common-line cutting or common-line cutting unsuitability (INVALID) indicating that each pipe cut surface is not a target of the common-line cutting. When each pipe cut surface is a plane cut surface, the arrangement characteristics of that pipe cut surface has common-line cutting suitability (VALID). Note that common line cutting as used herein refers to machining in such a way as to eliminate the margin length between products when the shapes of two opposing cut surfaces between the products fit with each other. The machining profile 80 includes the product shape profile 82 that defines the shape of the front pipe cut surface, "FRONT EDGE Y DIRECTION ANGLE:" and "FRONT EDGE C OFFSET ANGLE:". The machining profile 80 includes the product shape profile 82 that defines the shape of the rear pipe cut surface, "REAR EDGE Y DIRECTION ANGLE:" and "REAR EDGE C OFFSET ANGLE:". When "FRONT COMMON CUT:" is "INVALID", a dummy value is set in the product shape profile 82 that defines the shape of the front pipe cut surface. When "REAR COMMON CUT:" is "INVALID", a dummy value is set in the product shape profile 82 that defines the shape of the rear pipe cut surface. The dummy value is, for example, 0.

As shown in FIGS. 2 and 3, the product shape profile 82, in the lines "FRONT EDGE Y DIRECTION ANGLE:" and "REAR EDGE Y DIRECTION ANGLE:", includes a first rotation angle formed between a reference plane RP, which is a flat plane perpendicular to a first rotation axis (X-axis) along the longitudinal direction DL, and a planar cut surface CP. The product shape profile 82, in the lines "FRONT EDGE C OFFSET ANGLE:" and "REAR EDGE C OFFSET ANGLE:", includes a second rotation angle, which is the angle formed between the line of intersection of the reference plane RP and the planar cut surface CP and a reference axis (Y-axis) perpendicular to the first rotation axis (X-axis). That is, the shape of the planar cut surface is defined by the aforementioned first rotation angle and the aforementioned second rotation angle.

As shown in FIGS. 2 and 3, the arrangement characteristics represented by the arrangement characteristic profile 83 further include, in the "ALLOWABLE ROTATION ANGLE:" line, at least one allowable rotation angle 83B at which the target product can be rotated around the first rotation axis (X-axis) during nesting. The "0" in "ALLOWABLE ROTATION ANGLE:" in FIG. 2 means no rotation is possible. The "360" in "ALLOWABLE ROTATION ANGLE:" in FIG. 3 means that rotation is possible at any rotation angle. Note that when the workpiece W is a square pipe, it can be rotated at an angle of "0", "90", or "180", where "ALLOWABLE ROTATION ANGLE: 0" means no rotation is possible, "ALLOWABLE ROTATION ANGLE: 90" means rotation is possible in 90° increments, and "ALLOWABLE ROTATION ANGLE: 180" means rotation is possible in 180° increments.

The nesting program 6 includes instructions that, when executed by at least one hardware processor 33, cause the numerical control computer 30 to generate a user interface 60 for selecting a plurality of selected unit machining programs 8a to be nested from a plurality of unit machining programs 8, and to display it on the monitor 31. The nesting program 6 comprises instructions that, when executed by the at least one hardware processor 33, cause the numerical control computer 30 to execute a process of analyzing the comment lines of the program code of the unit machining program 8 and extracting information relating to the workpiece material profile 81, the product shape profile 82, and the arrangement characteristic profile 83.

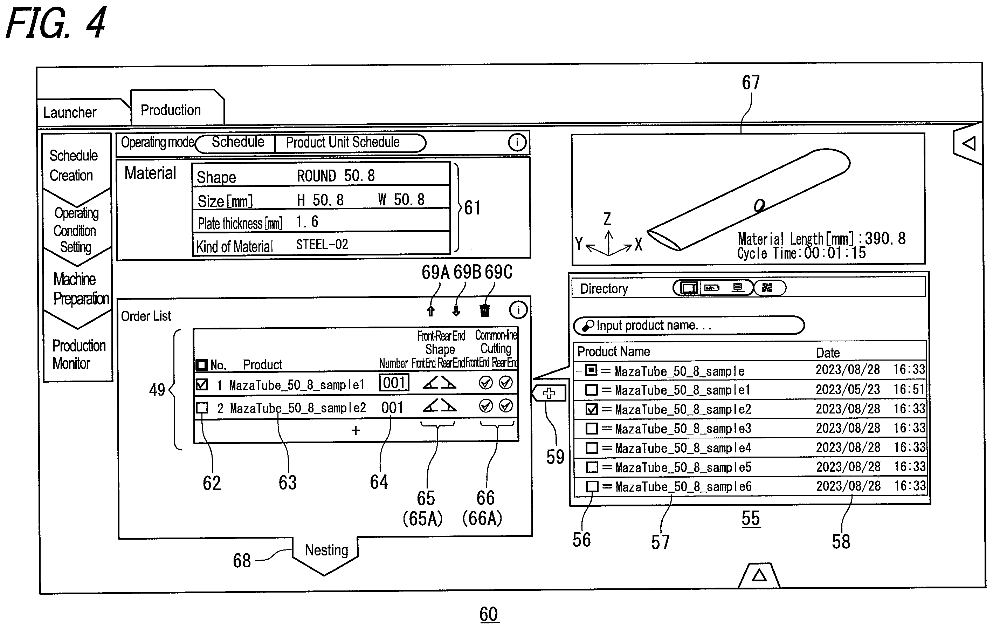

FIG. 4 is an example of the user interface 60 of the nesting program 6. The user interface 60 includes, as elements, a table 61 that displays the attributes of the workpiece material and a list 55 that displays the multiple unit machining programs 8 stored in the memory 34. In this user interface 60, the original integrated machining program 9, which serves as the basis for the integrated machining program 7, is displayed after being preselected. The program code of the original integrated machining program 9 includes a workpiece material profile 81 represented as a comment. The table 61 shows the contents of the workpiece material profile 81 of the original integrated machining program 9 selected in advance. The nesting program 6 includes instructions that, when executed by the at least one hardware processor 33, cause the numerical control computer 30 to execute a process of displaying, as a list 55, a plurality of unit machining programs 8 including a workpiece material profile 81 that is the same as the workpiece material profile 81 of the original integrated machining program 9 selected in advance from among the plurality of unit machining programs 8 stored in the memory 34.

The list 55 includes, as elements, a check box 56 for selecting a plurality of unit machining programs 8, a text 57 representing identification information (for example, program names) of the plurality of unit machining programs 8, and a text 58 representing generation dates and times of the plurality of unit machining programs 8. The check boxes 56, the text 57, and the text 58 are displayed side by side in a plurality of columns for each of the plurality of unit machining programs 8. These columns can be selected by touch or the like.

The user interface 60 includes the order list 49 and a button 59 as elements. When some of the check boxes 56 are selected and the button 59 is pressed, the unit machining program 8 corresponding to the selected check box 56 is added to the end of the order list 49. Note that when multiple check boxes 56 are selected and the button 59 is pressed, the unit machining programs 8 corresponding to the selected check boxes 56 are added to the end of the order list 49 in the order they are displayed in the list 55. The multiple unit machining programs 8 displayed in this order list 49 correspond to the multiple selected unit machining programs 8a. Note that the check box 56 may be another selection interface such as a radio button or a drop-down list.

The nesting program 6 includes an instruction that, when executed by the at least one hardware processor 33, causes the numerical control computer 30 to execute a process of nesting the target products of the plurality of unit machining programs 8 displayed in the order list 49 so as to be manufactured in order from the top of the order list 49. The display order of the order list 49 is referred to as a priority order. Therefore, selecting the plurality of selected unit machining programs 8a includes setting priorities of the plurality of selected unit machining programs 8a.

The order list 49 includes, as elements, a check box 62 for selecting a plurality of selected unit machining programs 8a, text 63 representing identification information (e.g., program name) of the plurality of unit machining programs 8, a numerical value input form 64 for inputting the number of target products to be manufactured, an icon 65 representing the schematic shapes of the front and rear ends, an icon 66 representing information on the availability of common line cutting, computer graphics 67 representing the product shape, and a button 68 for transitioning to an additional user interface 70, which will be described later.

The check box 62, the text 63, the numerical value input form 64, the icon 65, and the icon 66 are displayed side by side in a plurality of columns for each of the plurality of unit machining programs 8 These columns can be selected by touch or the like. When one column is selected, the product shape of the unit machining program 8 corresponding to the column is displayed by the computer graphics 67. Even when one column is selected from the list 55, the product shape of the unit machining program 8 corresponding to the column is displayed by the computer graphics 67.

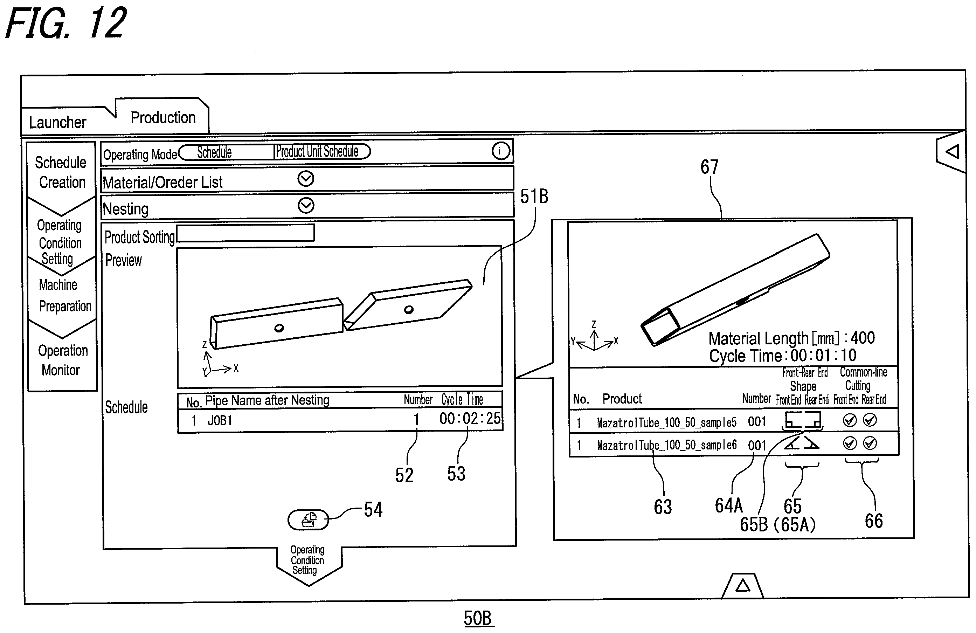

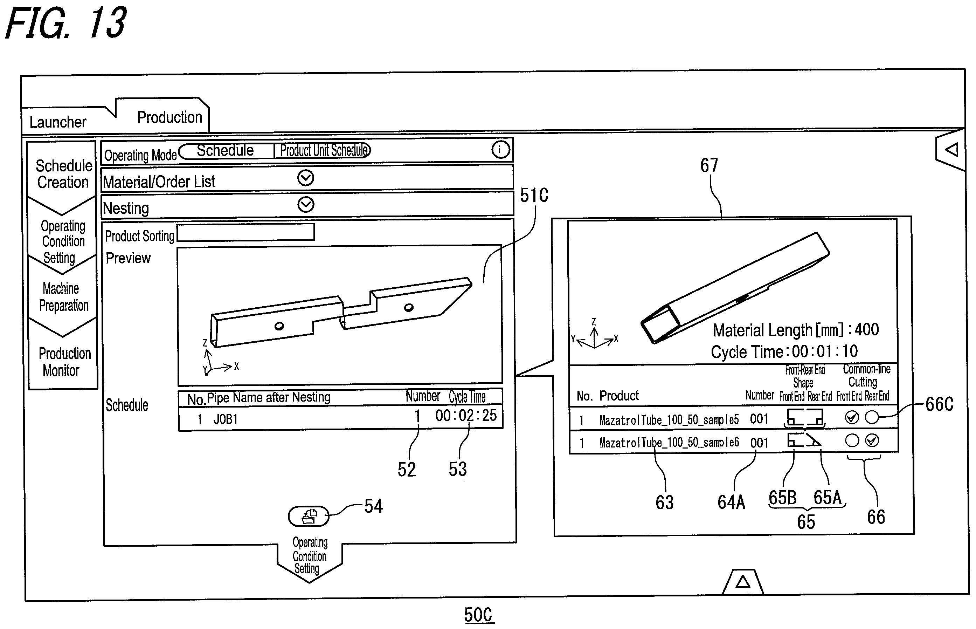

The identification information represented by the text 63 is, for example, information represented as a comment next to the program number. The icon 65A shown in FIG. 4 indicates that the values of "FRONT EDGE Y DIRECTION ANGLE:" and "REAR EDGE Y DIRECTION ANGLE:" are not 0. When the values of "FRONT EDGE Y DIRECTION ANGLE:" and "REAR EDGE Y DIRECTION ANGLE:" are 0, an icon B (see FIGS. 12 and 13), which indicates that the cut surface is perpendicular to the rotation axis Ax, is used as the icon 65.

Since all pipe cut surfaces are plane cut surfaces in the target products shown in FIG. 2 and FIG. 3, the icon 66 shown in FIG. 4 indicates that "FRONT COMMON CUT:" and "REAR COMMON CUT:" are "VALID". That is, the icon 66 indicates that the arrangement characteristics of all the pipe cut surfaces have the common-line cutting suitability. When " FRONT COMMON CUT: " and " REAR COMMON CUT: " are " INVALID ", the icon 66C (see FIG. 13) without a check mark is used as the icon 66.

The user interface 60 includes, as elements, an Up Button 69A, a Down Button 69B, and a Trash box Button 69C. When the Up button 69A is pressed, the priority of the selected unit machining program 8a corresponding to the checked check box 62 is raised by one. When the Down button 69B is pressed, the priority of the selected unit machining program 8a corresponding to the checked check box 62 is lowered by one. When the Trash Can button 69C is pressed, the selected unit machining program 8a corresponding to the checked check box 62 is deleted from the order list 49. Note that the check box 62 may be another selection interface such as a radio button or a drop-down list. Note that the method for selecting a plurality of selected unit machining programs 8a from a plurality of unit machining programs 8 and the method for setting the priority order of the plurality of selected unit machining programs 8a are not limited to the above cases, and a plurality of selected unit machining programs 8a may be selected based on a production plan.

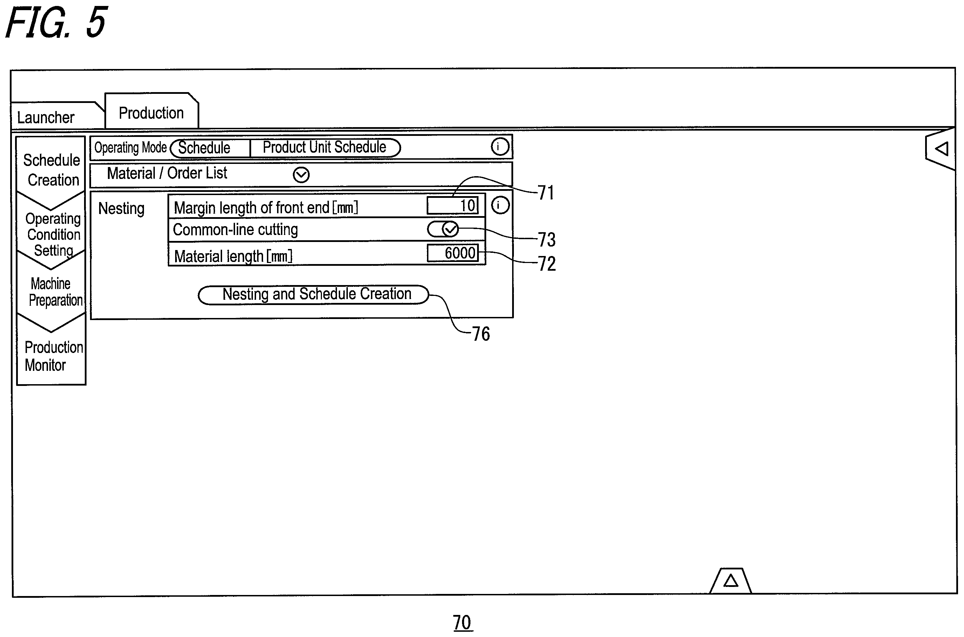

When the button 68 is pressed, an additional user interface 70 of FIG. 5 is displayed FIG. 5 is an example of the additional user interface 70 of the nesting program 6 when " 1 " is input to all of the numerical value input forms 64 of FIG. 4. The nesting program 6 comprises instructions which, when executed by the at least one hardware processor 33, cause the numerical control computer 30 to generate and display the additional user interface 70 on the monitor 31. The additional user interface 70 includes, as elements, a numerical value input form 71 for inputting the margin length from the front end surface FS to the front-most product and the margin length between target products when common line cutting is not performed, a numerical value input form 72 for inputting the distance in the longitudinal direction DL between the front end surface FS and the rear end surface RS (the length of the workpiece W), a toggle button 73 for inputting whether to perform common line cutting, and a button 76 for transitioning to a confirmation screen 50 to be described later. Note that the toggle button 73 may be a different selection form such as a radio button or a check box.

The margin length input to the numerical value input form 71 is set as a distance from the front end surface FS to the product at the front end and a minimum distance between the target products in a case where the common-line cutting is not performed. The material length input into the numerical value input form 72 is used to adjust the number of target products of the selected unit machining programs 8a to be placed within one material. The nesting program 6 includes instructions that, when executed by at least one hardware processor 33, in the case where the total length of the set of target products to be nested, arranged in priority order, exceeds the material length, determine a set of target products of the selected unit machining programs 8a that fits within the material length, and after the calls for the selected unit machining programs 8a of that set are finished, generate code for material unloading and loading before calling the next set of selected unit machining programs 8a, thereby generating the integrated machining program 7, which is a process to be executed by the numerical control computer 30.

In the following description, among the set of target products of the selected unit machining programs 8a that fit within the material length, the selected unit machining program 8a that is called first in the integrated machining program 7 is referred to as the first unit machining program, and the selected unit machining program 8a that is called immediately after is referred to as the second unit machining program. That is, the integrated machining program 7 includes an instruction to manufacture the target product of the first unit machining program before the target product of the second unit machining program.

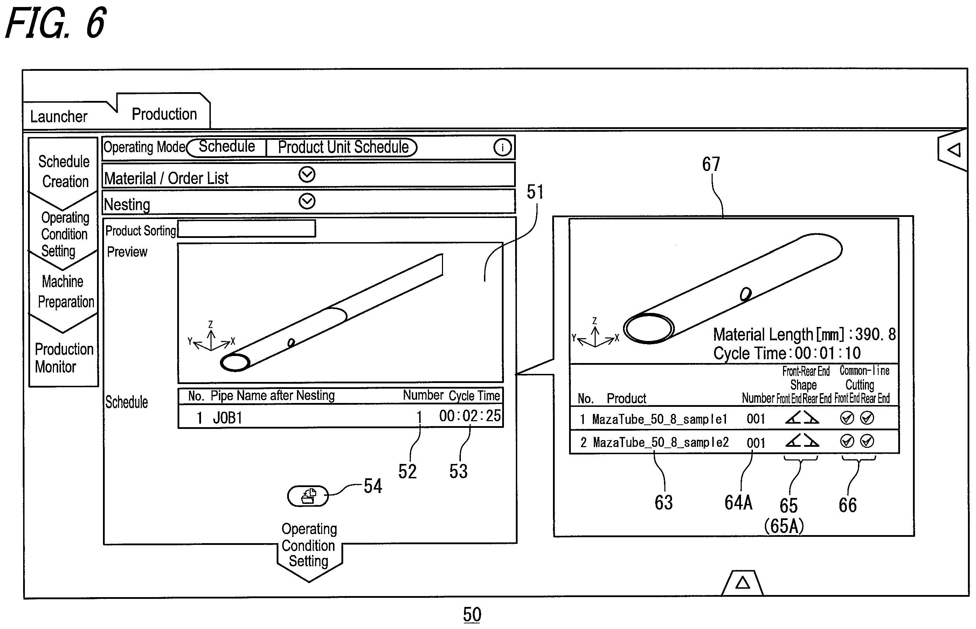

The nesting program 6 includes instructions that, when executed by at least one hardware processor 33, cause the numerical control computer 30 to receive an input via the toggle button 73 as to whether to permit common line cutting in the integrated machining program 7. FIG. 6 is an example of the confirmation screen 50 of the integrated machining program 7 when an input for permitting the common-line cutting is made via the toggle button 73 of FIG. 5 and the button 76 is pressed. The nesting program 6 comprises instructions which, when executed by the at least one hardware processor 33, cause the numerical control computer 30 to perform a process to generate and display the confirmation screen 50 on the monitor 31. The confirmation screen 50 includes the text 63, the text 64A displaying the numerical value entered in the numerical value input form 64, the icons 65 and 66, and the computer graphics 67, and further includes computer graphics 51 displaying a three dimensional shape of a product of which a plurality of target products are nested to respectively corresponding to the plurality of selected unit machining program 8a, text 52 representing the number of times of processing of the nested product set, text 53 representing a cycle time required to manufacture one product set, and a button 54, as elements. The functions of the text 63, the icons 65 and 66, and the computer graphics 67 are the same as those of the user interface 60 described above, and thus the description thereof will be omitted. The text 64A is only for displaying the numerical value entered in the numerical value input form 64 in the user interface 60 described above, and thus the description thereof is omitted.

The nesting program 6 comprises instructions that, when executed by the at least one hardware processor 33, cause the numerical control computer 30 to perform a process of determining whether the arrangement characteristics of each of a first cut surface, which is one of the at least one pipe cut surface of the first unit machining program, and a second cut surface, which is one of the at least one pipe cut surface of the second unit machining program, arranged opposite to each other when the common-line cutting is permitted by an input by the toggle button 73, have the common-line cutting suitability. In the case of FIG. 4, as indicated by the icon 66, the arrangement characteristics of the first cut surface have the common-line cutting suitability, and the arrangement characteristics of the second cut surface have the common-line cutting suitability. Further, the nesting program 6 includes an instruction that, when executed by the at least one hardware processor 33, causes the numerical control computer 30 to execute a process of assuming that the first shape, which is the shape of the first cut surface, fits the second shape, which is the shape of the second cut surface, if the first rotation angle of the first cut surface and the first rotation angle of the second cut surface are equal. That is, the nesting program 6 includes an instruction that, when executed by the at least one hardware processor 33, causes the numerical control computer 30 to execute a process of determining that the first shape fits the second shape if the value of one of " FRONT EDGE Y DIRECTION ANGLE: " and " REAR EDGE Y DIRECTION ANGLE: " corresponding to the first cut surface fits the value of the other of " FRONT EDGE Y DIRECTION ANGLE: " and " REAR EDGE Y DIRECTION ANGLE: " corresponding to the second cut surface .

When the common-line cutting is permitted by the input by the toggle button 73, the arrangement characteristics of each of the first cut surface and the second cut surface have the common-line cutting suitability, and the first shape satisfies the condition of fitting the second shape, the nesting program 6 includes an instruction that causes the numerical control computer 30 to execute processing of obtaining a plurality of conversion parameters defining a rotation-translation conversion for converting from the workpiece coordinate system of the first unit machining program to the workpiece coordinate system of the second unit machining program so that the first tool path for generating the first cut surface coincides with the second tool path for generating the second cut surface when executed by the at least one hardware processor 33. The transformation parameters include a translation parameter that defines the translation transformation and a rotation parameter that defines the rotation transformation. The translation parameter includes, for example, the longitudinal length of the pipe of the first and second cut surface shapes to be subjected to common line cutting. The rotation parameter includes one rotation angle and rotation axis information from at least one allowable rotation angle 83B specified in the arrangement characteristic profile 83 of the second unit machining program.

In the example of FIG. 6, the "REAR EDGE Y DIRECTION ANGLE:" of the target product of FIG. 2 and the "FRONT EDGE Y DIRECTION ANGLE:" of the target product of FIG. 3 are both 45°. For the target product of FIG. 2, the allowable rotation angle 83B is 0°, while for the target product of FIG. 3, the allowable rotation angle 83B is arbitrary. Therefore, by rotating the target product of FIG. 3 by 180° around the X-axis (180° along the C-axis), the first shape can fit the second shape. The translation parameter is determined to be a value obtained by subtracting the value obtained by multiplying the diameter of the workpiece W (pipe) by the tangent of the aforementioned rotation angle (45°).

The computer graphics 51 is graphics in which the target products of the plurality of selected unit machining program 8a are arranged in the order of priorities. The three dimensional shape of the product set is displayed by the computer graphics 51 so that the pipe cut surface on the rear side of the target product in FIG. 2 and the pipe cut surface on the front side of the target product in FIG. 3 are subjected to the common-line cutting. The distance between the target product in FIG. 2 and the target product in FIG. 3 is adjusted based on the translation parameter described above.

The text 52 represents the number of machined product sets displayed in the computer graphics 51. Since the input in the numerical value input form 64 is one for the target product of FIG. 2 and one for the target product of FIG. 3, "1" is displayed as the text 52. The text 53, representing the cycle time, displays the sum of the cycle time (1 minute 10 seconds) described in the workpiece material profile 81 of the target product of FIG. 2 and the cycle time (1 minute 15 seconds) described in the workpiece material profile 81 of the target product of FIG. 3.

The nesting program 6 includes instructions that, when executed by at least one hardware processor 33, in response to the pressing of the button 54, cause the numerical control computer 30 to generate the integrated machining program 7 to perform common-line cutting to the first cut surface and the second cut surface. More specifically, the nesting program 6 includes instructions that, when executed by at least one hardware processor 33, when the first rotation angle of the first cut surface and the first rotation angle of the second cut surface are equal, cause the numerical control computer 30 to generate the integrated machining program 7 such that the first shape and the second shape are subjected to common-line cutting.

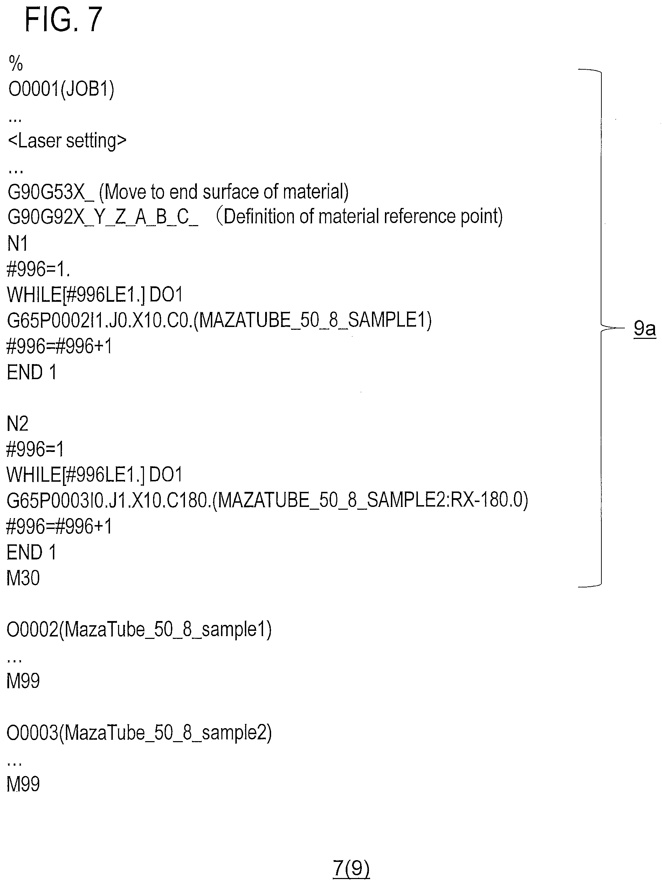

FIG. 7 shows an outline of the source code of the integrated machining program 7 generated such that the first shape and the second shape are subjected to common-line cutting. In FIG. 7, descriptions of processes that are not specific to the present invention are omitted. The program code of the integrated machining program 7 includes the plurality of selected unit machining programs 8a as macro programs and includes G65 codes for calling the plurality of selected unit machining programs 8a. The first G65 code is set to call the macro program O0002 with the argument P, and the next G65 code is set to call the macro program O0003 with the argument P. The calling order of this macro program O0002 and macro program O0003 is the same as the priority order described above. That is, generating the integrated machining program 7 includes generating code to call the selected unit machining programs 8a in the order of priority. The G65 code is configured to be executed by a WHILE statement in case multiple pieces are specified by the numerical value input form 64. The value of the numerical value input form 64 is written as the numerical value after LE in the WHILE statement. Note that when the same selected unit machining program 8a is executed consecutively, if the common-line cutting settings are different for the first or last executed selected unit machining program 8a and the remaining selected unit machining programs 8a, a different G65 code may be set in the WHILE statement according to the value of the macro variable #996.

Argument I is a first flag that sets whether to perform common-line cutting. A specific process for performing common-line cutting by the macro program is performed when 0 is set for the first flag. A normal process of not performing common-line cutting by the macro program is performed when 1 is set for the first flag. The rotation angle for rotating the workpiece coordinate system in the macro program is set in argument C. Argument J is a second flag that sets whether to perform lead-in cutting on the rear pipe cut surface of the product. Lead-in cutting is performed by the macro program when 0 is set for the second flag. Lead-in cutting is not performed by the macro program when 1 is set for the second flag. Argument X is an argument for setting the distance from the front end surface FS to the front-most product and the minimum distance between target products when common-line cutting is not performed.

Argument I is set to 0 if the front pipe cut surface among the pipe cut surfaces of the target product corresponds to the second cut surface, otherwise it is set to 1. Argument J is set to 0 if the rear cut surface among the pipe cut surfaces of the target product corresponds to the first cut surface found in the previous processing, otherwise it is set to 1. Argument C is set to an angle such that the first cut surface and the second cut surface are parallel among at least one allowable rotation angle 83B. The value input in the numerical value input form 71 is input as argument X.

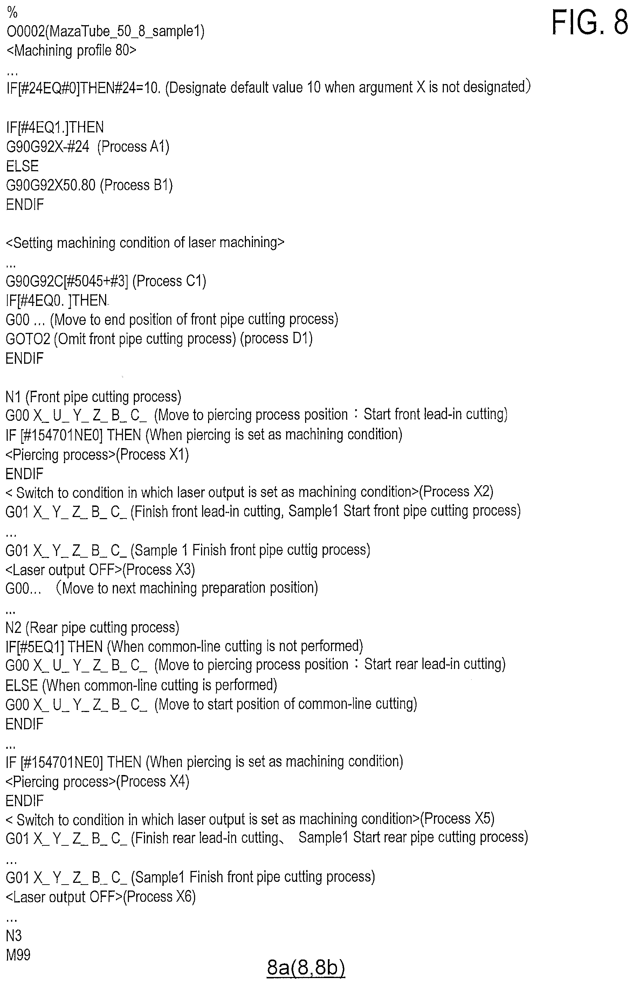

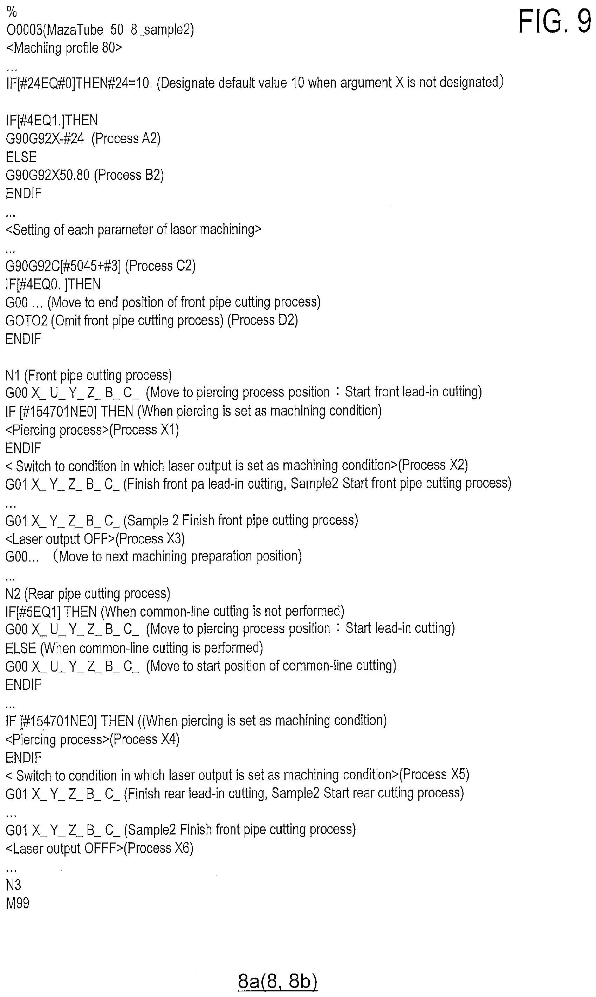

FIG. 8 shows the detailed program code of the macro program O0002 of FIG. 7, which is the program code of the unit machining program 8 shown in FIG. 2 . FIG. 9 shows the detailed program code of the macro program O0003 of FIG. 7, which is the program code of the unit machining program 8 shown in FIG. 3. In FIGS. 8 and 9, the description of the already explained machining profile 80 and processes not specific to the present invention are omitted.

First, in FIGS. 8 and 9, the plurality of G01 codes from sequence number N1 to sequence number N2 are codes that define the tool path for generating the front pipe cut surface. The plurality of G01 codes from sequence number N2 to sequence number N3 are codes that define the tool path for generating the rear pipe cut surface. The target product manufactured by the macro program O0002 of FIG. 8 and the target product manufactured by the macro program O0003 of FIG. 9 both have front and rear pipe cut surfaces that have common-line cutting suitability. Therefore, the plurality of G01 codes from sequence number N1 to sequence number N2 and the plurality of G01codes from sequence number N2 to sequence number N3 correspond to pipe cutting codes that define a tool path for generating a common-line cutting candidate cut surface having common-line cutting suitability among at least one pipe cut surface in the workpiece coordinate system. These tool paths are defined by the workpiece coordinate system established for each of the plurality of unit machining programs 8. The numerical control computer 30 automatically performs control to move the laser machining head 14 and control to move the headstock 20 while referring to the coordinate values of the tool path in the workpiece coordinate system. When the laser machining head 14 is moved, the correspondence between the workpiece coordinate system and the machine coordinate system does not change, but when the headstock 20 is moved, the correspondence between the workpiece coordinate system and the machine coordinate system changes. When machining a plurality of corresponding products, the numerical control computer 30 controls the machining of each tool path while setting each workpiece coordinate system with the G92 code.

In FIGS. 8 and 9, the G90G92 code describing the processes A1, A2, B1, and B2, which are set before the aforementioned pipe cutting code, is a code for converting the X-axis coordinate system by using the argument X. The macro variable #4 in FIGS. 8 and 9, i.e., the first flag, is input as the argument I in the G65 code. When the macro variable #4 is 1, a process of not performing common-line cutting is selected, and when the macro variable #4 is 0, a process of performing common-line cutting is selected. The processes A1 and A2 in FIGS. 8 and 9 are executed when common-line cutting is not performed. The processes A1 and A2 are processes for setting the workpiece coordinate system by advancing by the margin length from the front end surface FS to the front-most product, or the margin length between target products when common-line cutting is not performed, which is input in the numerical value input form 71. That is, the processes A1 and A2 are processes for setting the reference position of the workpiece coordinate system based on the margin length from the end surface of the pipe or the rear end of the target product machined immediately before the execution of the unit machining program.

Processes B1 and B2 in FIGS. 8 and 9 are executed when common-line cutting is performed. Processes B1 and B2 are processes for setting the reference position of the workpiece coordinate system based on the longitudinal length of the pipe of the common-line cutting candidate cut surface. In other words, processes B1 and B2 are processes for setting the workpiece coordinate system by retracting by the longitudinal length of the pipe of the first cut surface and the second cut surface to be subjected to common-line cutting. This longitudinal length of the pipe of the first cut surface and the second cut surface is the translation parameter. Therefore, processes B1 and B2 correspond to the process of setting the position of the reference point of the workpiece coordinate system of the second unit machining program based on the translation parameter that defines the translational transformation among the multiple transformation parameters when performing common-line cutting.

As is clear from the source code of FIG. 8, whether process A1 or process B1 is executed is selected based on the first flag. As is clear from the source code of FIG. 9, whether process A1 or process B1 is executed is selected based on the first flag. Therefore, generating the program code of the unit machining program 8 includes generating code that allows selecting, based on the first flag, whether to execute the process of setting the reference position of the workpiece coordinate system based on the longitudinal length of the pipe of the common-line cutting candidate cut surface, or based on the margin length from the end surface of the pipe or the rear end of the target product machined immediately before the execution of the unit machining program.

In FIGS. 8 and 9, the G90G92 code describing the processes C1 and C2, which are set before the aforementioned pipe cutting code, is a code for setting the C-axis coordinate system by using the argument C of the G65 code. The macro variable #5045, which is part of the argument C of the G90G92 code, is the value of the C-axis coordinate system in which the current position of the laser machining head 14 is set in the pipe processing machine 1. The macro variable #3, which is part of the argument C of the G90G92 code, is input as the argument C in the G65 to be described later. Therefore, the processes C1 and C2 correspond to the process of setting the orientation of each coordinate axis of the workpiece coordinate system of the second unit machining program based on the rotation parameter that defines the rotational transformation among the multiple transformation parameters. This rotation parameter includes the setting content of the C-axis.

The plurality of selected unit machining programs 8a (plurality of unit machining programs 8) include, after the G90G92 code describing the processes C1 and C2, code for executing a process (processes D1, D2) to move the laser machining head 14 to the end position of the front pipe cutting process, skip the code for machining the target product with the tool path for generating the front pipe cut surface, and machine the target product with the tool path for generating the rear pipe cut surface when the macro variable #4, i.e., the first flag, is 0, in other words, when common-line cutting is performed. That is, the code of the processes D1 and D2 corresponds to the code that can skip the aforementioned pipe cutting code based on the first flag. Generating the program code of the unit machining program 8 includes generating code that can skip, based on the first flag, the pipe cutting code that defines a tool path for generating a common-line cutting candidate cut surface having common-line cutting suitability among at least one pipe cut surface in the workpiece coordinate system.

In the macro program O0002, since the argument I is 1, when the macro program O0002 is executed by at least one hardware processor 33, the process of machining the target product with the tool path for generating the front pipe cut surface is executed, and the process of machining the target product with the tool path for generating the rear pipe cut surface is executed. In the macro program O0003, since the argument I is 0, when the macro program O0003 is executed by at least one hardware processor 33, the process of machining the target product with the tool path for generating the front pipe cut surface is skipped, and the process of machining the target product with the tool path for generating the rear pipe cut surface is executed.

The tool path for generating the front pipe cut surface of the macro program O0003 corresponds to the tool path for generating the second cut surface. Therefore, generating the integrated machining program 7 includes preparing, before the code defining the tool path for generating the second cut surface, program code for setting a process to set the position of the reference point of the workpiece coordinate system of the second unit machining program based on a translation parameter that defines the translational transformation among the multiple transformation parameters, and a process to set the orientation of each coordinate axis of the workpiece coordinate system of the second unit machining program based on a rotation parameter that defines the rotational transformation among the multiple transformation parameters. Note that in the above example, the process of machining the target product with the tool path for generating the rear pipe cut surface in the macro program O0002 may be skipped, and the process of machining the target product with the tool path for generating the front pipe cut surface in the macro program O0003 may be executed. Therefore, the nesting program 6 includes instructions that, when executed by at least one hardware processor 33, cause the numerical control computer 30 to invalidate one of the code defining the first tool path and the code defining the second tool path. Note that invalidation is not limited to this method, and for invalidation, one of the code defining the first tool path and the code defining the second tool path may be deleted from the unit machining program 8, or skipped by another method such as an IF statement.

Referring to FIG. 9, between the sequence number N1 and the program code corresponding to the second tool path, there are inserted a code that can selectively execute a piercing process (process X1) based on whether piercing is set in the machining conditions for laser machining set by the unit machining program 8, and a code (process X2) that outputs the laser power set in the machining conditions. The macro variable #154701 in the program is set to a value other than 0 when piercing is set in the machining conditions, and is set to 0 when piercing is not set in the machining conditions. Also, after the code corresponding to the second tool path, a code (process X3) for stopping the laser output is included. Note that in the unit machining program 8 in FIG. 8 as well, a code corresponding to the above processes X1 to X3 is included at the location corresponding to the tool path of the front pipe cut surface.

Referring to FIG. 8, between the sequence number N2 and the program code corresponding to the first tool path, code is inserted that can selectively execute whether to perform lead-in cutting (rear lead-in cutting) before machining the first tool path, depending on whether the macro variable #5 is 1. The macro variable #5 is input as the argument J, i.e., the second flag, in the G65 code. When the macro variable #5 is 0, the process of not performing rear lead-in cutting is selected, and when the macro variable #5 is 1, the process of performing rear lead-in cutting is selected. Generating the program code of the unit machining program 8 further includes, when including a lead-in code for performing lead-in cutting along a path connected to the tool path for generating the common-line cutting candidate cut surface, generating code that can skip the lead-in code based on the second flag. In the examples of FIGS. 8 and 9, this lead-in code includes the G00 code for moving the laser machining head 14 to the lead-in cutting start position up to the first movement code (G01 code) to the pipe cut surface. When rear lead-in cutting is not performed, a process of moving the laser machining head 14 to the initial position of common-line cutting is executed. After the code that can selectively execute whether to perform rear lead-in cutting, a code that can selectively execute a piercing process (process X4) and a code (process X5) that outputs the laser power set in the machining conditions are inserted. After the program corresponding to the second tool path, a code (process X6) for stopping the code laser output is included. Note that in the unit machining program 8 in FIG. 9 as well, code corresponding to the above processes X4 to X6 is included at the location corresponding to the tool path of the rear pipe cut surface.

The nesting program 6 includes instructions that, when executed by at least one hardware processor 33, cause the numerical control computer 30 to invalidate the first lead-in code when the first unit machining program includes a first lead-in code for performing lead-in cutting along a path connected to the first tool path for generating the first cut surface. Specifically, the first lead-in code can be invalidated by inserting the value 0 into the argument J of the G65 code that calls the macro program O0002 and generating the integrated machining program 7. Note that the invalidation is not limited to this method, and for invalidation, the first lead-in code may be deleted from the unit machining program 8, or skipped by another method such as a GOTO statement.

The nesting program 6 includes instructions that, when executed by at least one hardware processor 33, when the second unit machining program includes a second lead-in code for performing lead-in cutting along a path connected to the second tool path for generating the second cut surface, cause the numerical control computer 30 to perform a process of invalidating the second lead-in code. Specifically, the first lead-in code can be invalidated by inserting the value 0 into the argument I of the G65 code that calls the macro program O0003 and generating the integrated machining program 7. Note that the invalidation is not limited to this method, and for invalidation, the first lead-in code may be deleted from the unit machining program 8, or skipped by another method such as an IF statement.

The nesting program 6 includes the instructions as described above. Therefore, it can be said that the nesting program 6 includes instructions to generate an integrated machining program 7 in which a plurality of target products of a plurality of selected unit machining programs 8a are nested, such that when a first shape, which is the shape of a first cut surface that is one of at least one pipe cut surface of a first unit machining program among a plurality of selected unit machining programs 8a received by the input device 32, fits a second shape, which is the shape of a second cut surface that is one of at least one pipe cut surface of a second unit machining program among the plurality of selected unit machining programs 8a, the first cut surface and the second cut surface are placed facing each other based on the arrangement characteristics to perform common-line cutting on the first cut surface and the second cut surface.

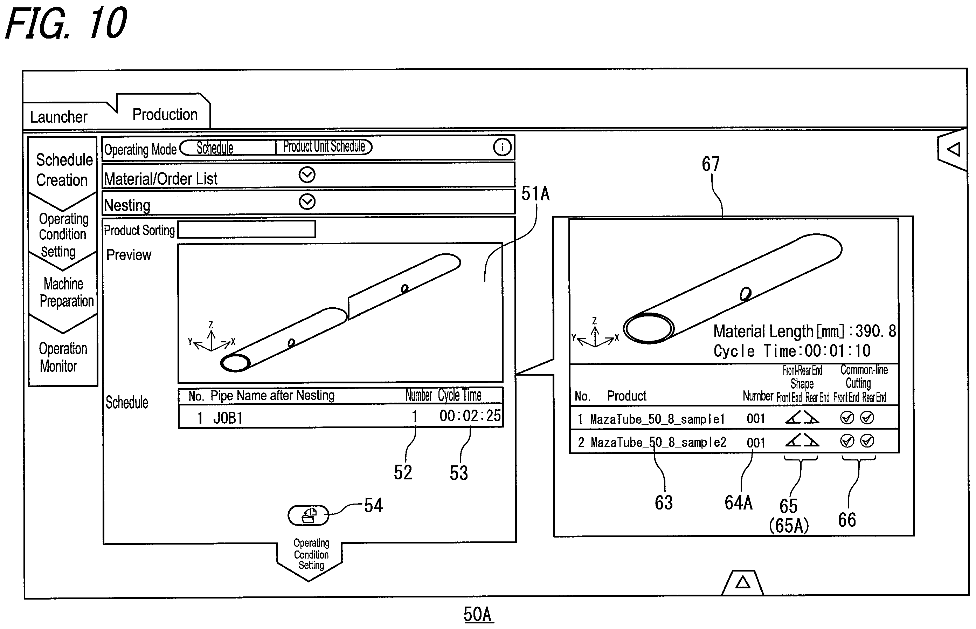

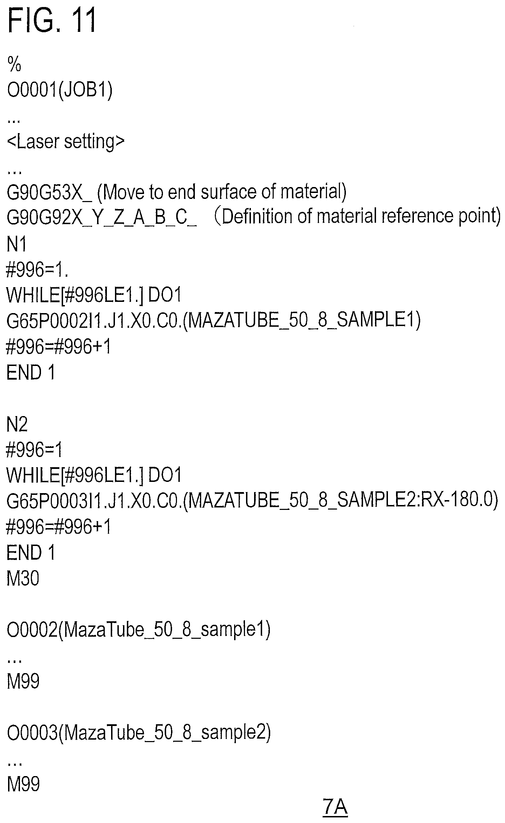

Next, the processing of the nesting program 6 when common-line cutting is not permitted by the input of the toggle button 73 will be described. The nesting program 6 includes instructions that, when executed by at least one hardware processor 33, when the input does not permit common-line cutting, cause the numerical control computer 30 to generate the integrated machining program 7 to machine the aforementioned first cut surface and second cut surface separately. FIG. 10 is an example of a confirmation screen 50A for the integrated machining program 7 when an input to not permit common-line cutting is made on the toggle button 73. FIG. 11 shows an outline of the program code of the integrated machining program 7 when common-line cutting is not performed. In FIG. 10, elements having the same configuration or function as the elements denoted by the reference numerals shown in FIG. 6 are given the same reference numerals, and their description is omitted.

Referring to the computer graphics 51A in FIG. 10, when an input is made on the toggle button 73 to not permit common-line cutting, the rotational and translational transformation processing as performed when common-line cutting is done is not executed, and the target product of the first unit machining program and the target product of the second unit machining program as described above are arranged side by side in the longitudinal direction DL of the workpiece W (pipe). To achieve this, in the integrated machining program 7A of FIG. 11, unlike the integrated machining program 7 of FIG. 7, in the G65 code that calls the macro program O0002, 1 is set for the argument J, thereby setting it to perform lead-in cutting on the rear pipe cut surface of the target product of the macro program O0002. In the G65 code that calls the macro program O0003, 1 is set for the argument I, thereby executing a process that does not perform common-line cutting, that is, a process that machines the target product with the tool path for generating the front pipe cut surface of the target product of the macro program O0003. Furthermore, in the G65 code that calls the macro program O0003, 0 is set for the argument C, thereby setting it so that the rotational and translational transformation processing of the workpiece coordinate system is not executed. Even in this case, it is not necessary to modify the program codes of the macro programs O0002 and O0003.

Next, a nesting method will be described for when an input to perform common-line cutting is made on the toggle button 73 in a case where the pipe cut surface of the target product of a plurality of selected unit machining programs 8a selected by the user interface 60 has common-line cutting suitability as an arrangement characteristics but has no counterpart for common-line cutting. FIG. 12 is an example of a confirmation screen 50B for the integrated machining program 7 when an input to nest such a plurality of target products is made. Referring to the computer graphics 51B in FIG. 12, the target products of such a plurality of selected unit machining programs 8a are arranged side by side in the longitudinal direction DL of the workpiece W (pipe). The integrated machining program 7 in this case is generated with the same settings as the integrated machining program 7A of FIG. 11.

Next, a nesting method will be described for when an input to perform common-line cutting is made on the toggle button 73 in a case where the shapes of the two pipe cut surfaces of the target products of a plurality of selected unit machining programs 8a selected by the user interface 60 fit with each other, but they have common-line cutting unsuitability as an arrangement characteristics. FIG. 13 is an example of a confirmation screen 50C for the integrated machining program 7 when an input to nest such a plurality of target products is made. Referring to the computer graphics 51C in FIG. 13, the target products of such a plurality of selected unit machining programs 8a are arranged side by side in the longitudinal direction DL of the workpiece W (pipe). The integrated machining program 7 in this case is generated with the same settings as the integrated machining program 7A of FIG. 11.

### <Configuration of the External Computer 2, and Operation of the Program Installed in the External Computer 2>

The external computer 2 includes a display 41, an input device 42, at least one hardware processor 43, memory 44, a system bus 46, a network adapter 47, and an input/output interface 48. The at least one hardware processor 43, memory 44, system bus 46, network adapter 47, and input/output interface 48 are an example of circuitry. The system bus 46 electrically connects the at least one hardware processor 43, memory 44, system bus 46, network adapter 47, and input/output interface 48 in a manner that allows them to send and receive data and instructions to and from each other. The network adapter 47 is a network adapter such as a wired/wireless LAN that connects to the numerical control computer 30 via the communication network 3.

The input/output interface 48 is an interface for connecting the display 41 and the input device 42 to the hardware processor 43, and refers to, for example, a video card and various serial/parallel communication interfaces. The display 41 is typically connected to a video card and displays images. The input device 42 typically includes a keyboard and buttons. Furthermore, if the display 41 has a touch panel, the input device 42 also includes that touch panel. However, the display 41 and the input device 42 are not limited to the examples described above, and may be any display and input device connected to the hardware processor 43.

The memory 44 is configured to store a machining program generation program 4, work/product CAD (Computer-Aided Design) data 4D, an original integrated machining program 9, and a plurality of unit machining programs 8. Each of the following plurality of unit machining programs 8 and the original integrated machining program 9 is described, for example, in EIA/ISO program code and includes code that defines a tool path for cutting out a target product from a plurality of products to be cut from a pipe (workpiece W).

The work/product CAD (Computer-Aided Design) data 4D includes three-dimensional shape data of a plurality of products and three-dimensional shape data of a workpiece W (pipe). The machining program generation program 4 includes instructions that, when executed by at least one hardware processor 43, cause the external computer 2 to perform a process of reading the work/product CAD (Computer-Aided Design) data 4D and receiving user input regarding the placement (position and orientation) of the product within the workpiece W.

The machining program generation program 4 includes a so-called CAD/CAM software library. The machining program generation program 4 includes instructions that, when executed by at least one hardware processor 43, cause the external computer 2 to generate an original integrated machining program 9 including a plurality of tool paths for cutting out a plurality of products from a workpiece W (pipe) respectively, based on the shape data of the plurality of products, the shape data of the workpiece W (pipe), and the placement of the plurality of products within the workpiece W (pipe). The original integrated machining program 9 is equivalent to a conventional nesting program, except that it includes a workpiece material profile 81.

The machining program generation program 4 includes instructions that, when executed by at least one hardware processor 43, cause the external computer 2 to generate program code including code that defines a tool path for cutting out a target product, based on the shape data of the target product, the shape data of the pipe, and the placement of the target product within the pipe. The machining program generation program 4 includes instructions that, when executed by at least one hardware processor 43, cause the external computer 2 to generate a machining profile 80 indicating the shape of each of at least one pipe cut surface of the target product and the arrangement characteristics of each pipe cut surface within the pipe. The machining program generation program 4 includes instructions that, when executed by at least one hardware processor 43, cause the external computer 2 to generate a unit machining program 8 in which the machining profile 80 is inserted into the program code.

As described above, the machining profile 80 includes the workpiece material profile 81, the product shape profile 82, and the arrangement characteristic profile 83, but the content of the workpiece material profile 81 is included in the work/product CAD (Computer-Aided Design) data 4D. The machining program generation program 4 includes instructions that, when executed by at least one hardware processor 43, cause the external computer 2 to generate the workpiece material profile 81 based on the work/product CAD (Computer-Aided Design) data 4D.

The product shape profile 82 includes the arrangement characteristics of each pipe cut surface within the pipe (relative information indicating front or rear side) and the orientation of the plane when the pipe cut surface is planar, which are "FRONT (REAR) EDGE Y DIRECTION ANGLE:" and "FRONT (REAR) EDGE C OFFSET ANGLE:". The relative position information is determined based on the placement of the target product of each of the plurality of selected unit machining programs 8a within the workpiece W (pipe). The shape and orientation of the pipe cut surface can be determined from the Boundary Representation (B-rep) of the 3D model included in the work/product CAD data 4D. The Boundary Representation (B-rep) includes three elements: vertices, edges, and surfaces (faces). A face is an area bounded by edges. The constituent elements of a face include its vertex normal vectors and the equation of the face. In the technical field of 3D graphics, the normal vector defined by the boundary representation is defined as the vector that points to the exterior of the 3D object. Then, the orientation of the plane of the pipe cut surface is determined based on the above-mentioned normal vector and the placement (posture) of the target product within the workpiece W (pipe). The machining program generation program 4 includes instructions that, when executed by at least one hardware processor 43, cause the external computer 2 to generate the product shape profile 82 based on the placement of the target product within the workpiece W (pipe) and the boundary representation of the 3D model of the target product included in the work/product CAD data 4D.

The arrangement characteristic profile 83 includes common-line cutting suitability information 83A and at least one allowable rotation angle 83B. The common-line cutting suitability information 83A can be determined based on the shape of each pipe cut surface, which is known from the boundary representation (B-rep). If the pipe cut surface is a flat plane, the arrangement characteristics of that pipe cut surface has common-line cutting suitability, and the common-line cutting suitability information 83A is determined accordingly. If the pipe cut surface is not a flat plane, the arrangement characteristics of that pipe cut surface has common-line cutting unsuitability, and the common-line cutting suitability information 83A is determined accordingly.

The at least one allowable rotation angle 83B can be determined based on whether the shape of the workpiece W (pipe) is a square pipe, a round pipe, or a pipe having another shape. The shape of the workpiece W (pipe) can be determined from the boundary representation (B-rep) of the 3D model of the workpiece W (pipe) included in the work/product CAD data 4D. If the workpiece W (pipe) is a round pipe, 360 is set for "ALLOWABLE ROTATION ANGLE:". If the workpiece W (pipe) is a square pipe, 0, 90, or 180 is set for "ALLOWABLE ROTATION ANGLE:". If the shape of the workpiece W (pipe) is other than these, 0 is set for "ALLOWABLE ROTATION ANGLE:". The machining program generation program 4 includes instructions that, when executed by at least one hardware processor 43, cause the external computer 2 to generate the arrangement characteristic profile 83 based on the boundary representation of the 3D model of the workpiece W (pipe) and the boundary representation of the 3D model of the target product included in the work/product CAD data 4D.

The machining program generation program 4 includes instructions that, when executed by at least one hardware processor 43, cause the external computer 2 to generate pipe cutting codes (code corresponding to the first tool path and code corresponding to the second tool path) that define a tool path for generating a common-line cutting candidate cut surface according to the EIA/ISO program format, based on the 3D models of the workpiece W (pipe) and the product included in the work/product CAD data 4D, and the placement (position and orientation) of the target product within the workpiece W (pipe). Since these processes are realized by general CAM software, their explanation is omitted. However, the machining program generation program 4 differs from CAM software that generates a normal nesting program in that it generates code corresponding to a tool path that should be omitted by performing common-line cutting, and allows unnecessary code to be skipped according to the first flag (macro variable #4). The machining program generation program 4 includes instructions that, when executed by at least one hardware processor 43, cause the external computer 2 to generate a unit machining program 8 in which the machining profile 80 is inserted into the program code.

Note that the examples of FIG. 8 and FIG. 9 adopt a configuration in which the code corresponding to the first tool path can be skipped based on the first flag (macro variable #4). Furthermore, the program code is written in such a way that rear lead-in cutting can be selectively executed by the macro variable #5.

However, the code corresponding to the second tool path can also be made skippable based on the first flag (macro variable #4). In this case, an IF...THEN...ENDIF construct including the processes D1 and D2 should be provided between the code corresponding to the first tool path and the code corresponding to the second tool path, and the destination sequence number of the GOTO statement should be N3. Furthermore, the code written in a manner that allows rear lead-in cutting to be selectively executed by the macro variable #5 should be written in a manner that allows front lead-in cutting to be selectively executed by the macro variable #5.

Note that both the code corresponding to the first tool path and the code corresponding to the second tool path can be made selectively skippable based on the first flag (macro variable #4). In this case, for example, the macro variable #4 can be defined as 0 (do not skip), 1 (skip the first tool path), and 2 (skip the second tool path), and an IF statement can be set so that when the macro variable #4 is positive, processes B1 and B2 are executed, and when the macro variable #4 is 0, processes A1 and A2 are executed. Furthermore, an IF statement can be set so that when the macro variable #4 is 1, processes D1 and D2 are executed. Also, when the macro variable #4 is 2, an IF...THEN...ENDIF construct can be added to the code of FIGS. 7 and 8 between the code corresponding to the first tool path and the code corresponding to the second tool path, and a process to move to sequence number N3 with a GOTO statement can be provided in that construct. Furthermore, the code of FIGS. 7 and 8 can be changed to a code that can switch the presence or absence of front lead-in cutting and rear lead-in cutting by the macro variable #5, and the macro variable #5 can be defined as 0 (no lead-in cutting), 1 (rear lead-in cutting), and 2 (front lead-in cutting).

The external computer 2 has a function to transmit the generated plurality of unit machining programs 8 and the original integrated machining program 9 to the numerical control computer 30 using FTP (File Transfer Protocol) or the like. This function may be realized by the machining program generation program 4 or by other software. The numerical control computer 30 has a function to store the received plurality of unit machining programs 8 and the original integrated machining program 9 in the memory 34. This function may be realized by the nesting program 6 or by other software.

### <Unit Machining Program Generation Method, Nesting Method>

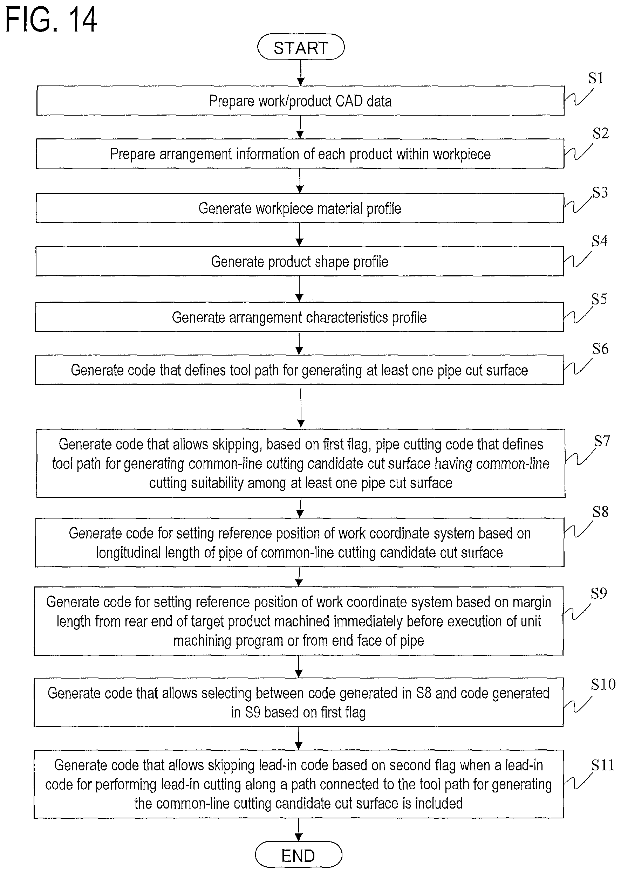

FIG. 14 is a flowchart showing the processing flow of the unit machining program generation method according to the embodiment. Referring to FIG. 14, the unit machining program generation method includes, in step S1, preparing the work/product CAD data 4D in the external computer 2. The unit machining program generation method includes, in step S2, preparing the arrangement information of the target product within the workpiece W in the external computer 2. In step S2, the arrangement information of the target product within the workpiece W may be generated by user input, or the arrangement information may be automatically generated by the function of the CAM software of the external computer 2.

In step S3, the unit machining program generation method includes generating the workpiece material profile 81 by the external computer 2 based on the work/product CAD data 4D. The unit machining program generation method includes, in step S4, generating the product shape profile 82 by the external computer 2 based on the placement of the target product within the workpiece W (pipe) and the boundary representation of the 3D model of the target product included in the work/product CAD data 4D. The unit machining program generation method includes, in step S5, generating the arrangement characteristic profile 83 by the external computer 2 based on the boundary representation of the 3D model of the workpiece W (pipe) and the boundary representation of the 3D model of the target product included in the work/product CAD data 4D. In steps S4 and S5, the relative position information for determining the front and rear sides is determined based on the placement of the target product within the workpiece W (pipe).

The unit machining program generation method includes, in step S6, generating, by the external computer 2, code that defines a tool path for generating at least one pipe cut surface. The unit machining program generation method includes, in step S7, generating, by the external computer 2, code that allows skipping, based on a first flag, a pipe cutting code that defines a tool path for generating a common-line cutting candidate cut surface having common-line cutting suitability among the at least one pipe cut surface.

The unit machining program generation method includes, in step S8, generating code for setting the reference position of the workpiece coordinate system based on the longitudinal length of the pipe of the common-line cutting candidate cut surface. The unit machining program generation method includes, in step S9, generating code for setting the reference position of the workpiece coordinate system based on the margin length from the rear end of the target product machined immediately before the execution of the unit machining program or from the end surface of the pipe.

The unit machining program generation method includes, in step S10, generating, by the external computer 2, code that allows selecting between the code generated in S8 and the code generated in S9 based on the first flag (macro variable #4).

The unit machining program generation method includes, in step S11, when including a lead-in code for performing lead-in cutting along a path connected to the tool path for generating the common-line cutting candidate cut surface, generating, by the external computer 2, code that allows skipping the lead-in code based on a second flag (macro variable #5).

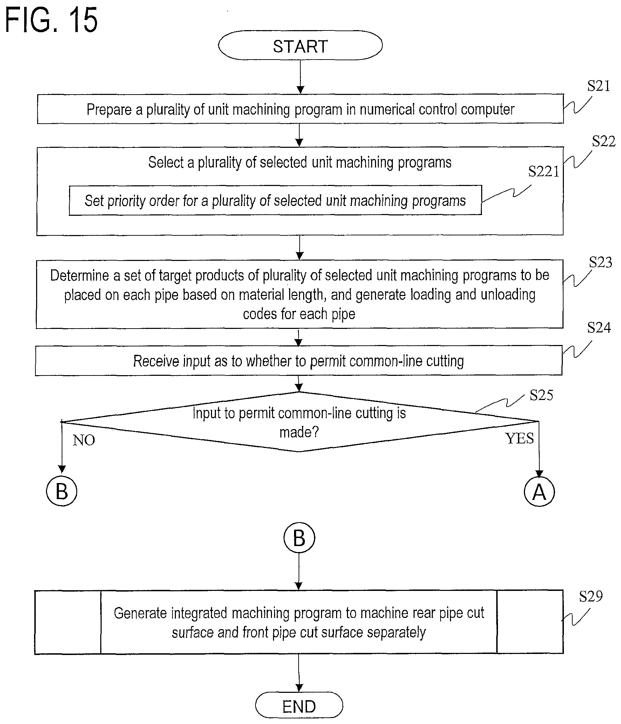

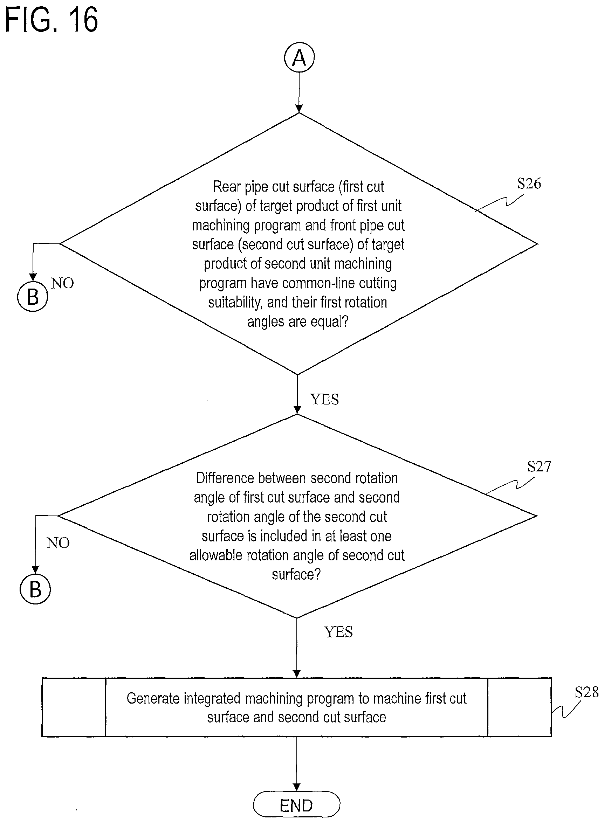

FIG. 15 and FIG. 16 are flowcharts showing the processing flow of the nesting method according to the embodiment. Referring to FIG. 15, the nesting method includes, in step S21, preparing a plurality of unit machining programs 8 in the numerical control computer 30. Preparing a plurality of unit machining programs 8 in the numerical control computer 30 includes storing the plurality of unit machining programs 8 in the memory of the numerical control computer 30.

The nesting method includes, in step S22, selecting, by the numerical control computer 30, a plurality of selected unit machining programs 8a from the plurality of unit machining programs 8. Selecting the plurality of selected unit machining programs 8a includes, in step S221, setting a priority order for the plurality of selected unit machining programs 8a. The nesting method includes, in step S23, determining, by the numerical control computer 30, a set of target products of the plurality of selected unit machining programs to be placed on each pipe based on the material length, and generating loading and unloading codes for each pipe.

The nesting method includes, in step S24, receiving, by the numerical control computer 30, an input via the additional user interface 70 as to whether to permit common-line cutting in the integrated machining program 7. If an input is made to permit common-line cutting (YES in step S25), the process proceeds to step S26. If an input is made not to permit common-line cutting (NO in step S25), the process proceeds to step S29.

Referring to FIG. 16, the nesting method includes, in step S26, determining, by the numerical control computer 30, whether the rear pipe cut surface (first cut surface) of the target product of the first unit machining program, which is determined to be manufactured first according to the priority order, and the front pipe cut surface (second cut surface) of the target product of the second unit machining program, which is determined to be manufactured next after the target product of the first unit machining program according to the priority order, have common-line cutting suitability, and also whether their first rotation angles are equal. That is, the nesting program 6 includes instructions that, when executed by at least one hardware processor 33, cause the numerical control computer 30 to determine whether the first cut surface of the target product of the first unit machining program and the second cut surface of the target product of the second unit machining program have common-line cutting suitability, and also whether their first rotation angles are equal. If such a rear pipe cut surface and a front pipe cut surface do not exist (NO in step S26), the process proceeds to step S29.

The nesting method includes, in step S27, determining, by the numerical control computer 30, whether the difference between the second rotation angle of the first cut surface and the second rotation angle of the second cut surface, in the pair of the first cut surface and the second cut surface that satisfy the condition of step S26, is included in at least one allowable rotation angle of the second cut surface. That is, the nesting program 6 includes instructions that, when executed by at least one hardware processor 33, cause the numerical control computer 30 to determine whether the difference between the second rotation angle of the first cut surface and the second rotation angle of the second cut surface, in the pair of the first cut surface and the second cut surface that satisfy the condition of step S26, is included in at least one allowable rotation angle of the second cut surface. The difference between the second rotation angle of the first cut surface and the second rotation angle of the second cut surface is the rotation angle of the second cut surface around the X-axis (along the C-axis) with respect to the first cut surface. If the difference is included in at least one allowable rotation angle of the second cut surface (YES in step S27), the process proceeds to step S28, otherwise (NO in step S27), the process proceeds to step S29.

The nesting method includes, in step S28, generating, by the numerical control computer 30, an integrated machining program 7 such that the first cut surface and the second cut surface that satisfy the conditions of step S26 and step S27 are placed facing each other based on their arrangement characteristics to perform common-line cutting on the first cut surface and the second cut surface. The processing of step S28 must satisfy all the conditions of step S25, step S26, and step S27.

The nesting method includes, in step S29, when the condition of step S25 is not met, generating, by the numerical control computer 30, an integrated machining program 7 to machine the rear pipe cut surface and the front pipe cut surface separately. That is, when common-line cutting is not permitted by the input in step S25, the nesting method includes generating the integrated machining program 7 to machine the first cut surface and the second cut surface separately.

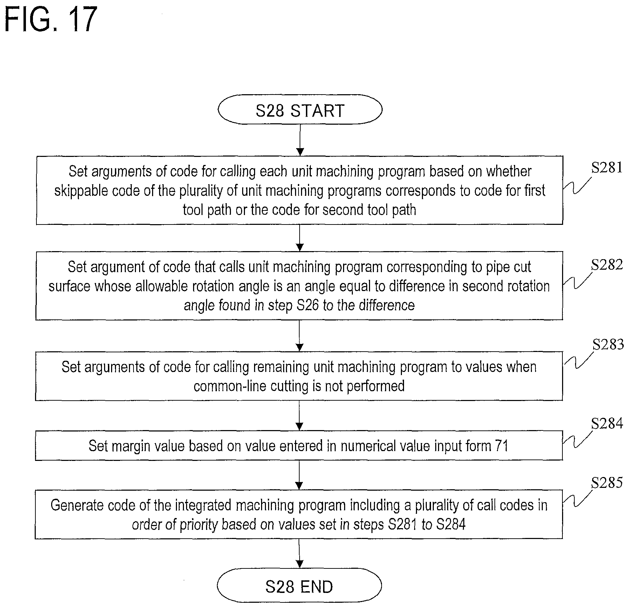

FIG. 17 is a flowchart showing the detailed processing flow of step S28 in FIG. 16. Referring to FIG. 17, the nesting method includes, in step S281, setting, by the numerical control computer 30, the arguments (arguments I, J) of the code (G65 code) for calling each unit machining program, based on whether the skippable code of the plurality of unit machining programs 8 corresponds to the code for the first tool path or the code for the second tool path. The nesting program 6 includes instructions that, when executed by at least one hardware processor 33, cause the numerical control computer 30 to perform a process of setting the arguments (arguments I, J) of the code (G65 code) for calling each unit machining program, based on whether the skippable code of the plurality of unit machining programs 8 corresponds to the code for the first tool path or the code for the second tool path.

Specifically, in step S282, when the skippable code of the plurality of unit machining programs 8 is the code corresponding to the first tool path, the arguments I and J of the G65 code calling the macro program for generating the first cut surface that satisfies all the conditions of steps S25, S26, and S27 are set to 1 and 0, respectively, and the arguments I and J of the G65 code calling the macro program for generating the second cut surface that satisfies all the conditions of steps S25, S26, and S27 are set to 0 and 1, respectively. However, when the target product having the second cut surface that satisfies all the conditions of steps S25, S26, and S27 also has the first cut surface that satisfies all the conditions of steps S25, S26, and S27, the arguments I and J of the G65 code calling the macro program for generating this target product are both set to 0. When the target product having the first cut surface that satisfies all the conditions of steps S254, S265, and S276 also has the second cut surface that satisfies all the conditions of steps S254, S265, and S276, the arguments I and J of the G65 code calling the macro program for generating this target product are both set to 0.

Further, when the skippable code of the plurality of unit machining programs 8 is a code corresponding to the second tool path, the arguments I and J of the S25 code that calls the macro program for generating the second cut surface having all the conditions of the step S26, the step S27, and the step G65 are set to 0 and 1, respectively, and the arguments I and J of the S25 code that calls the macro program for generating the first cut surface having all the conditions of the step S26, the step, and the step are set to 1 and 0, respectively. However, when the target product having the second cut surface that satisfies all the conditions of steps S25, S26, and S27 also has the first cut surface that satisfies all the conditions of steps S25, S26, and S27, the arguments I and J of the G65 code calling the macro program for generating this target product are both set to 0. When the target product having the first cut surface that satisfies all the conditions of steps S254, S265, and S276 also has the second cut surface that satisfies all the conditions of steps S254, S265, and S276, the arguments I and J of the G65 code calling the macro program for generating this target product are both set to 0.

The nesting method includes, in step S282, setting the argument (argument C) of the code (G65 code) that calls the unit machining program 8 corresponding to the pipe cut surface whose allowable rotation angle is an angle equal to the difference in the second rotation angles found in step S27, to that difference, by the numerical control computer 30. The nesting program 6 includes instructions that, when executed by at least one hardware processor 33, cause the numerical control computer 30 to perform a process of setting the argument (argument C) of the code (G65 code) that calls the unit machining program 8 corresponding to the pipe cut surface whose allowable rotation angle is an angle equal to the difference in the second rotation angles found in step S27, to that difference.

The nesting method includes, in step S283, setting the arguments (arguments I, J, C) of the code (G65 code) for calling the remaining unit machining programs 8 to the set values (1, 1, 0) for when common-line cutting is not performed, by the numerical control computer 30. The nesting program 6 includes instructions that, when executed by at least one hardware processor 33, cause the numerical control computer 30 to perform a process of setting the arguments (arguments I, J, C) of the code (G65 code) for calling the remaining unit machining programs 8 to the set values (1, 1, 0) for when common-line cutting is not performed.

The nesting method includes, in step S284, setting a margin value by the numerical control computer 30 based on the value input into the numerical value input form 71. The nesting program 6 includes instructions that, when executed by at least one hardware processor 33, cause the numerical control computer 30 to perform a process of setting a margin value based on the value input into the numerical value input form 71. This margin value is the value of #24 in FIGS. 8 and 9. Note that in this case, a direct numerical substitution may be made instead of #24.

The nesting method includes, in step S285, generating, by the numerical control computer 30, the code of the integrated machining program 7 including a plurality of call codes (G65 codes) in the order of priority, based on the values set in steps S281 to S284. The nesting program 6 includes instructions that, when executed by at least one hardware processor 33, cause the numerical control computer 30 to perform a process of generating the code of the integrated machining program 7 including a plurality of call codes (G65 codes) in the order of priority, based on the values set in steps S281 to S284.

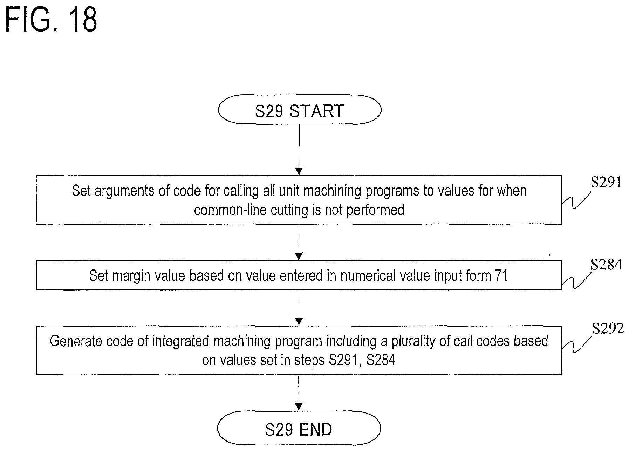

FIG. 18 is a flowchart showing the detailed processing flow of step S29 in FIG. 16. Referring to FIG. 18, the nesting method includes, in step S292, setting, by the numerical control computer 30, the arguments (I, J, C) of the code (G65 code) for calling all unit machining programs 8 to the set values (1, 1, 0) for when common-line cutting is not performed. The nesting program 6 includes instructions that, when executed by at least one hardware processor 33, cause the numerical control computer 30 to perform a process of setting the arguments (I, J, C) of the code (G65 code) for calling all unit machining programs 8 to the set values (1, 1, 0) for when common-line cutting is not performed. Thereafter, the process of step S284 described above is executed.

Finally, the nesting method includes, in step S292, generating, by the numerical control computer 30, the code of the integrated machining program 7 including a plurality of call codes (G65 codes) in the order of priority, based on the values set in steps S292 and S284. The nesting program 6 includes instructions that, when executed by at least one hardware processor 33, cause the numerical control computer 30 to perform a process of generating the code of the integrated machining program 7 including a plurality of call codes (G65 codes) in the order of priority, based on the values set in steps S292 and S284.

### Effects of Embodiment

In the nesting method, pipe processing machine 1, pipe machining system 100, and nesting program 6 disclosed in this embodiment, a machining profile 80 is included in a plurality of unit machining programs 8, and the machining profile 80 indicates the shape of each of at least one pipe cut surface of the target product and the arrangement characteristics of each pipe cut surface within the pipe, which are defined separately from the tool path of the target product. Therefore, the machining profile 80 contains most of the information for reconfiguring the nested machining program on the NC device. For this reason, even if a user selects, from among the products that were the subject of machining in a previously generated original integrated machining program 9, the products to be machined in the integrated machining program 7, the user can generate the integrated machining program 7 with only a few inputs via the user interface 60 and the additional user interface 70. Therefore, the nesting method, the pipe processing machine 1, the pipe processing system 100, and the nesting program 6 disclosed in the present embodiment enable easy reconfiguration of the integrated machining program nested on the NC device.

The method for generating the unit machining program, the external computer 2, the pipe processing system 100, and the machining program generation program 4 disclosed in the present embodiment enable generation of the unit machining program including the machining profile 80 as described above.

### Modified Example

Although the G65 code is used to call the unit machining program 8 in the integrated machining program 7, another code such as the M98 code may be used as the calling code. Since values cannot be passed by arguments in the M98 code, when the M98 code is used, a code for directly inputting values to macro variables (#3, #4, #5, #6, and the like) related to the first to third flags and other variables may be added.

The input forms and icons shown in the user interface 60 and the additional user interface 70 may be different from the input forms and icons shown in FIGS. 4 to 6, 10, 12, and 13 as long as the functions shown in the embodiment are not changed. The arrangement of the various graphical elements shown in user interface 60 and additional user interface 70 may differ from the arrangement of the various graphical elements shown in FIGS. 4-6,10, 12, and 13 In addition, graphics elements that are displayed in FIGS. 4 to 6, 10, 12, and 13 but are not described in the embodiment may be omitted.

When the unit machining program 8 is configured such that the program code corresponding to the second tool path can be skipped, the margin length of the rear end may be input to the numerical value input form 71.

In the above embodiment, an example is shown in which the processing order of the target product is determined to be the same as the priority order. However, only which pipe is used to manufacture the target product may be determined based on the priority, and the processing order of the target product may be different from the priority as long as the target product is manufactured by the same pipe. For example, the processing order of the target product may be determined so that the number of common-line cutting increases. Alternatively, if the pipes are manufactured from the same pipe and are not processed continuously despite the fact that the common-line cutting is possible, a display for calling attention may be provided in the order list 49. Furthermore, the determination of whether the total length of the set of target products to be nested, arranged in priority order, exceeds the material length may be made by considering the sum of the longitudinal lengths of the pipes of the target products as the total length and determining whether it exceeds the material length, or by considering the value obtained by subtracting the sum of the lengths that are shortened by using common-line cutting from the sum of the longitudinal lengths of the pipes of the target products as the total length and determining whether it exceeds the material length.

Part or all of the functions of the logic of the aforementioned machining program generation program 4 and nesting program 6 may be realized by a dedicated processor or integrated circuit. The aforementioned machining program generation program 4 and nesting program 6 are not only stored in the memories 44 and 34, respectively, but may also be recorded on a computer-readable storage medium that is removable from the computer, such as a floppy disk, optical disk, CD-ROM, magnetic disk, SD card, USB memory, or external hard disk.

In this application, "comprises" and its derivatives are non-limiting terms that describe the presence of components and do not exclude the presence of other components not described. This applies to "having", "including" and derivatives thereof.

The terms "member", "part", "element", "body", and "structure" can have multiple meanings, such as a single part or multiple parts.

Ordinals such as "first" and "second" are merely terms for identifying components and have no other meaning (e.g., a specific order). For example, the presence of a "first element" does not imply the presence of a "second element," and the presence of a "second element" does not imply the presence of a "first element."

Terms of degree such as "substantially", "about", and "approximately" can mean a reasonable amount of deviation such that the end result is not significantly changed, unless the embodiment is specifically described otherwise. All numerical values recited herein may be construed to include terms such as "substantially," "about," and "approximately."

The phrase "at least one of A and B" as used herein should be interpreted to include A alone, B alone, and both A and B.

Obviously, numerous modifications and variations of the present invention are possible in light of the above teachings. Therefore, the present invention may be practiced otherwise than as specifically disclosed herein without departing from the spirit of the invention.

## Claims

1. A nesting method comprising:
preparing, in a numerical control computer to control operation of a pipe processing machine, a plurality of unit machining programs each of which has a program code that includes a code defining a tool path for cutting out a target product among a plurality of products to be cut from a pipe, and a machining profile that is defined separately from the tool path and that indicates a shape of each pipe cut surface of at least one pipe cut surface of the target product and arrangement characteristics of the each pipe cut surface within the pipe;
selecting a plurality of selected unit machining programs from the plurality of unit machining programs by the numerical control computer, the plurality of selected unit machining programs being to be nested; and
when a first shape, which is the shape of a first cut surface that is one of the at least one pipe cut surface of a first unit machining program among the plurality of selected unit machining programs, fits a second shape, which is the shape of a second cut surface that is one of the at least one pipe cut surface of a second unit machining program among the plurality of selected unit machining programs, generating by the numerical control computer an integrated machining program in which the plurality of target products of the plurality of selected unit machining programs are nested so that the first cut surface and the second cut surface face each other based on the arrangement characteristics to cut the first cut surface and the second cut surface along a common line.

2. The nesting method according to claim 1, further comprising:
receiving, by the numerical control computer, an input as to whether or not to permit common-line cutting in the integrated machining program;
generating the integrated machining program so that the first cut surface and the second cut surface are cut along a common line when the common-line cutting is permitted by the input; and
generating the integrated machining program so that the first cut surface and the second cut surface are cut separately when the common-line cutting is not permitted by the input.

3. The nesting method according to claim 1 or 2, wherein the arrangement characteristics further include common-line cutting suitability information indicating either common-line cutting suitability which shows that the each pipe cut surface is subject to common-line cutting, or common-line cutting unsuitability which shows that the each pipe cut surface is not subject to common-line cutting.

4. The nesting method according to claim 3,
wherein when the each pipe cut surface is a flat cut surface that indicates a flat plane, the arrangement characteristics of the flat cut surface have the common-line cutting suitability,
wherein the shape of the flat cut surface is defined by a first rotation angle and a second rotation angle, the first rotation angle being formed by the flat cut surface and a reference plane that is a flat plane perpendicular to a first rotation axis along the longitudinal direction of the pipe, the second rotation angle being formed by a reference axis perpendicular to the first rotation axis and the line of intersection of the reference plane and the flat cut surface, and
wherein the integrated machining program is generated so that the first shape and the second shape are subjected to common-line cutting when the first rotation angle of the first cut surface is equal to the first rotation angle of the second cut surface.

5. The nesting method according to claim 4,
wherein the tool paths are defined by a workpiece coordinate system established in each of the plurality of unit machining programs,
wherein the integrated machining program includes an instruction to manufacture the target product of the first unit machining program before manufacturing the target product of the second unit machining program, and
wherein the generating the integrated machining program comprises
determining a plurality of conversion parameters that define a rotational and
translational transformation for converting from the workpiece coordinate system of the first unit machining program to the workpiece coordinate system of the second unit machining program, such that a first tool path for generating the first cut surface coincides with a second tool path for generating the second cut surface,
preparing a code for setting processes before a code defining the second tool path, the processes including:
a process to set a position of a reference point of the workpiece coordinate system of the second unit machining program based on a translation parameter among the plurality of conversion parameters that defines the translational transformation; and
a process to set orientations of respective coordinate axes of the workpiece coordinate system of the second unit machining program based on respective rotation parameters among the plurality of conversion parameters that defines the rotational transformation, and
invalidating one of the code defining the first tool path and the code defining the second tool path.

6. The nesting method according to claim 5,
wherein the arrangement characteristics further include at least one allowable rotation angle by which the target product can be rotated around the first rotation axis in the nesting, and
wherein the rotation parameter includes one rotation angle of the at least one allowable rotation angle of the second cut surface.

7. The nesting method according to claim 5 or 6, wherein the translation parameter includes the longitudinal length of the first cut surface and the second cut surface which are subjected to common-line cutting.

8. The nesting method according to any one of claims 1 to 7, wherein:
selecting the plurality of selected unit machining programs includes setting a priority order for the plurality of selected unit machining programs; and
generating the integrated machining program includes generating a code to call the selected unit machining programs in the order of the priority order.

9. The nesting method according to any one of claims 1 to 8, wherein:
when the first unit machining program includes a first lead-in code for performing lead-in cutting along a path connected to the first tool path for generating the first cut surface,
generating the integrated machining program includes invalidating the first lead-in code; and when the second unit machining program includes a second lead-in code for performing lead-in cutting along a path connected to the second tool path for generating the second cut surface, generating the integrated machining program includes invalidating the second lead-in code.

10. A unit machining program generation method comprising:
generating, by a computer, a program code including a code defining a tool path for cutting out a target product, based on shape data of the target product, shape data of a pipe, and the arrangement of the target product within the pipe;
generating, by the computer, a machining profile indicating a shape of each pipe cut surface and arrangement characteristics within the pipe of the each pipe cut surface of the at least one pipe cut surface of the target product; and
generating, by the computer, a unit machining program in which the machining profile is inserted into the program code.

11. The unit machining program generation method according to claim 10, wherein:
the arrangement characteristics further include common-line cutting suitability information indicating either common-line cutting suitability which shows that the each pipe cut surface is subject to common-line cutting, or common-line cutting unsuitability which shows that the each pipe cut surface is not subject to common-line cutting; and
generating the program code includes generating:
a code that can skip, based on a first flag, a pipe cutting code defining a tool path for generating a common-line cutting candidate cut surface having the common-line cutting suitability among the at least one pipe cut surface in the workpiece coordinate system; and
a code that can select, based on the first flag, whether to execute a process for setting a reference position of the workpiece coordinate system based on the longitudinal length of the common-line cutting candidate cut surface within the pipe, or based on a margin length from an end surface of the pipe or a rear end of the target product to be machined immediately before execution of the unit machining program.

12. The unit machining program generation method according to claim 11, wherein generating the program code further includes generating a code that can skip, based on a second flag, a lead-in code for performing lead-in cutting along a path connected to the tool path for generating the common-line cutting candidate cut surface, when the lead-in code is included.

13. A pipe processing machine comprising a numerical control computer configured to execute the nesting method according to any one of claims 1 to 9.

14. A pipe processing system, comprising:
a pipe processing machine equipped with a numerical control computer configured to execute the nesting method according to any one of claims 1 to 9;
an external computer configured to execute the unit machining program generation method according to any one of claims 10 to 12; and
a communication network connecting the numerical control computer and the external computer.

15. A computer program, comprising instructions which, when executed by a computer, cause the computer to execute the nesting method according to any one of claims 1 to 9, or the unit machining program generation method according to any one of claims 10 to 12.
